(19) Europäisches Patentamt
European Patent Office
Office européen des brevets

(11) Veröffentlichungsnummer: **0 070 806**
**B1**

(12) # EUROPÄISCHE PATENTSCHRIFT

(45) Veröffentlichungstag der Patentschrift: **29.05.85**

(51) Int. Cl.⁴: **C 09 B 62/503**, C 09 B 62/04, D 06 P 3/66

(21) Anmeldenummer: **82810305.1**

(22) Anmeldetag: **15.07.82**

(54) **Reaktivfarbstoffe, deren Herstellung und Verwendung.**

(30) Priorität: **21.07.81 CH 4765/81**

(43) Veröffentlichungstag der Anmeldung:
**26.01.83 Patentblatt 83/4**

(45) Bekanntmachung des Hinweises auf die Patenterteilung:
**29.05.85 Patentblatt 85/22**

(84) Benannte Vertragsstaaten:
**CH DE FR GB LI**

(56) Entgegenhaltungen:
**DE - B - 1 150 164**
**FR - A - 2 346 418**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Seiler, Herbert, Dr., Leimgrubenweg 60, CH-4125 Riehen (CH)**

**EP 0 070 806 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Reaktivfarbstoffe werden in großem Umfang für das Färben und Bedrucken von textilen Fasermaterialien eingesetzt. Obwohl heute eine große Anzahl von brauchbaren Reaktivfarbstoffen mit unterschiedlichen Eigenschaften und für verschiedene Anwendungsbereiche zur Verfügung steht, kann der erreichte technische Stand vielfach nicht voll befriedigen.

So ist häufig zu beobachten, daß der Fixiergrad nicht hoch genug ist, und zudem die Differenz zwischen Aufziehgrad und Fixiergrad zu groß ist (hoher Seifverlust), so daß ein erheblicher Teil des Reaktivfarbstoffes für den Färbevorgang verloren geht. Die Bereitstellung von verbesserten Reaktivfarbstoffen ist somit erwünscht. Der vorliegenden Erfindung lag daher die Aufgabe zugrunde, neue Reaktivfarbstoffe zu finden, die eine hohe Reaktivität besitzen, die aber den oben genannten Mangel nicht aufweisen, und die zudem besonders für das Ausziehfärbeverfahren geeignet sind. Es hat sich gezeigt, daß die weiter unten definierten neuen Reaktivfarbstoffe die gestellte Aufgabe weitgehend erfüllen.

Gegenstand der Erfindung sind Reaktivfarbstoffe der Formel

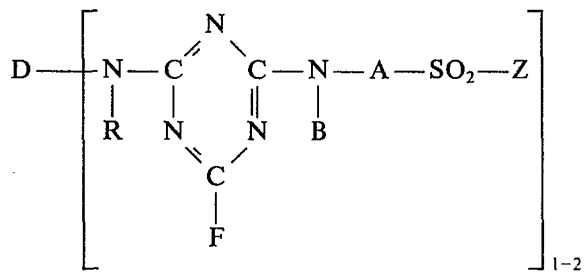

(1)

worin D der Rest eines organischen Farbstoffes der Mono- oder Polyazo-, Metallkomplexazo- oder Stilben-Reihe, R Wasserstoff oder gegebenenfalls substituiertes $C_{1-4}$-Alkyl, A $C_{2-6}$-Alkylen, Z $\beta$-Halogenäthyl oder Vinyl und B Wasserstoff oder der Rest eines gegebenenfalls substituierten Kohlenwasserstoffs ist.

Bevorzugte Untergruppen der Reaktivfarbstoffe der Formel (1) sind

a) Reaktivfarbstoffe der Formel (1), worin D, R, A und Z die unter Formel (1) angegebenen Bedeutungen haben, und B Wasserstoff oder $C_{1-4}$-Alkyl ist.
b) Reaktivfarbstoffe der Formel (1), worin D, R, Z und B die unter Formel (1) angegebenen Bedeutungen haben, und A Äthylen ist.
c) Reaktivfarbstoffe gemäß a), der Formel

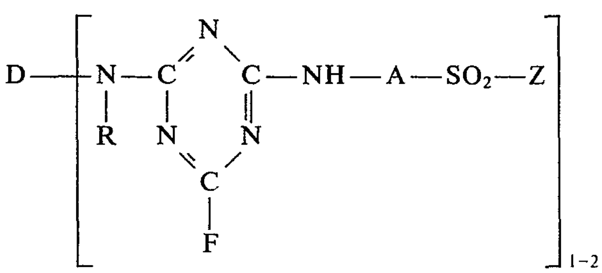

(2)

worin D und Z die unter a) angegebenen Bedeutungen haben, R Wasserstoff, Methyl oder Äthyl und A $C_{2-4}$-Alkylen ist.

d) Reaktivfarbstoff gemäß c), worin A Äthylen ist.
e) Reaktivfarbstoffe gemäß a) bis d), worin D der Rest eines Mono- oder Disazofarbstoffes ist.
f) Reaktivfarbstoffe gemäß a) bis d), worin D der Rest eines Metallkomplexazofarbstoffes ist.
g) Reaktivfarbstoffe gemäß f), worin D der Rest eines Metallkomplexazofarbstoffes der Benzol- oder Naphthalinreihe ist.
h) Reaktivfarbstoffe gemäß g), worin D der Rest eines 1 : 1-Kupferkomplexazofarbstoffes der Benzol- oder Naphthalinreihe ist, und das Kupferatom an jeweils eine metallisierbare Gruppe in ortho-Position zur Azobrücke gebunden ist.
i) Reaktivfarbstoffe gemäß k), der Formel

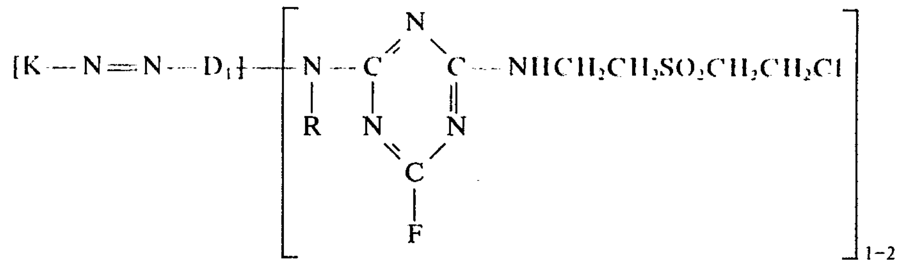 (3)

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist, oder je ein Reaktivrest sowohl an die Diazokomponente als auch an die Kupplungskomponente gebunden ist.

j) Reaktivfarbstoffe gemäß i), worin R Wasserstoff oder Methyl ist.

k) 1 : 1-Kupferkomplexe von Reaktivfarbstoffen gemäß i).

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Äthyl, Propyl, Isopropyl und Butyl, Alkoxygruppen mit 1 bis 4 Kohlenstoffatomen, wie Methoxy, Äthoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Die Reaktivfarbstoffe der Formel (1) enthalten als Substituenten insbesondere Methyl, Äthyl, Methoxy, Benzoylamino, Amino, Acetylamino, Ureido, Sulfomethyl, Hydroxy, Carboxy, Halogen und Sulfo.

Als Alkylrest kommt für R in Formel (1) ein geradkettiger oder verzweigter Alkylrest in Betracht, der auch substituiert sein kann, z. B. durch Halogen, Hydroxy, Cyan oder Sulfo. Als Beispiele für R seien genannt: Methyl, Äthyl, Propyl, Isopropyl, Butyl, Isobutyl, sek.-Butyl, tert.-Butyl, $\beta$-Chloräthyl, $\beta$-Hydroxyäthyl, $\beta$-Hydroxybutyl, $\beta$-Cyanäthyl und Sulfomethyl.

Als $C_{2-6}$-Alkylenrest kommt für A in Formel (1) ein geradkettiger oder verzweigter Alkylenrest in Betracht, z. B. Äthylen, n-Propylen, Isopropylen, n-Butylen, n-Pentylen und n-Hexylen. Bevorzugt ist der Äthylenrest.

Der Rest eines gegebenenfalls substituierten Kohlenwasserstoffs B ist z. B. ein Alkylrest, der geradkettig oder verzweigt ist, der vorzugsweise 1 bis 6 Kohlenstoffatome aufweist, und der weitersubstituiert sein kann, z. B. durch Halogen, Hydroxy, Cyan, Alkoxy, Carboxy oder Sulfo, oder ein unsubstituierter Alkylrest mit 7 bis 20 Kohlenstoffatomen, ein Cyclohexylrest, oder ein Phenylrest, der z. B. durch Methyl, Äthyl, Methoxy, Äthoxy, Chlor, Brom, Carboxy, Sulfo oder Sulfomethyl substituiert sein kann.

Als Beispiele für B seien die folgenden Substituenten genannt:
Methyl, Äthyl, Propyl, Isopropyl, Butyl, Isobutyl, sek.-Butyl, tert.-Butyl, Pentyl, Hexyl, Nonyl, Dodecyl, Hexadecyl, Pentadecyl, Carboxymethyl, $\beta$-Carboxyäthyl, $\beta$-Carboxypropyl, Methoxycarbonylmethyl, Äthoxycarbonylmethyl, $\beta$-Methoxyäthyl, $\beta$-Äthoxyäthyl, $\beta$-Methoxypropyl, $\beta$-Chloräthyl, $\gamma$-Chlorpropyl, $\gamma$-Brompropyl, Sulfomethyl, $\beta$-Sulfoäthyl, Aminosulfonylmethyl, $\beta$-Sulfatoäthyl, Cyclohexyl, Phenyl, o-, m- oder p-Chlorphenyl, o-, m- oder p-Methylphenyl, p-Äthylphenyl, p-Methoxyphenyl, o-, m- oder p-Sulfophenyl, p-Carboxyphenyl und p-Sulfomethylphenyl. Bevorzugt sind unsubstituierte Alkylreste mit 1 bis 4 Kohlenstoffatomen.

Insbesondere ist B Wasserstoff.

Die Farbstoffe der Formel (1) sind faserreativ, da sie am Triazinrest mindestens eine Abgangsgruppe enthalten.

Unter faserreativen Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, daß man organische Farbstoffe der Formel

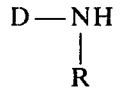 (4)

oder Farbstoffvorprodukte mit mindestens einem Äquivalent 2,4,6-Trifluor-1,3,5-triazin der Formel

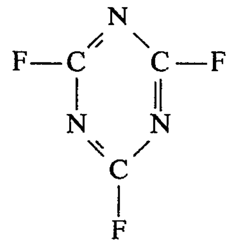
(5)

kondensiert, und das Kondensationsprodukt mit mindestens einem Äquivalent eines Amins der Formel

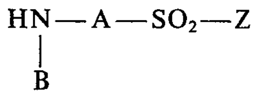
(6)

zu einem Reaktivfarbstoff der Formel (1) kondensiert, wobei D, R, A, Z und B in den Formeln (4) und (6) die unter Formel (1) angegebenen Bedeutungen haben, und daß man im Falle der Verwendung von Farbstoffvorprodukten, diese in die gewünschten Endfarbstoffe umwandelt.

Falls man von Farbstoffvorprodukten ausgeht, gelangt man zu den Reaktivfarbstoffen der Formel (1), indem man eine Komponente des Farbstoffes der Formel (4), die eine

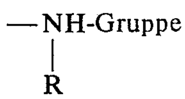

enthält, und eine Verbindung der Formel (5) kondensiert, und dann mit einem Amin der Formel (6) und mit der anderen Komponente des Farbstoffes der Formel (4) umsetzt.

Vorzugsweise verwendet man als Ausgangsstoffe Amine der Formel (6), worin A Äthylen ist.

Vorzugsweise verwendet man ferner Verbindungen der Formel (4), worin D der Rest eines Mono- oder Disazofarbstoffes ist.

Nach der oben beschriebenen Verfahrensvariante, bei welcher man von Farbstoffvorprodukten ausgeht, können die Farbstoffe der Formel (1), worin D der Rest eines aus zwei oder mehr als zwei Komponenten zusammengesetzten organischen Farbstoffes ist, in der Weise hergestellt werden, daß man eine Komponente des Farbstoffes der Formel (4), die eine

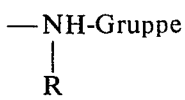

enthält, und eine Verbindung der Formel (5) kondensiert, und in einer beliebigen Stufe des Verfahrens mit einem Amin der Formel (6) und mit der anderen (bzw. den übrigen) Komponente(n) des Farbstoffes der Formel (4) zu einem Reaktivfarbstoff der Formel (1) umsetzt.

Beispiele für derartige, aus zwei oder mehr als zwei Komponenten zusammengesetzte organische Farbstoffe sind: Monoazo-, Disazo-, Trisazo-, Tetrazo- und Metallkomplexazofarbstoffe.

Die oben beschriebene Verfahrensvariante ist auch anwendbar zur Herstellung von Reaktivfarbstoffen der Formel (1), worin D der Rest eines sulfogruppenhaltigen Azofarbstoffes ist. In diesen kann derjenige Teil des Azofarbstoffrestes, an den der Reaktivrest unmittelbar gebunden ist, entweder der Rest der Diazokomponente oder der Rest der Kupplungskomponente sein. Dadurch ergeben sich zwei Varianten der oben beschriebenen Verfahrensabänderung.

Die eine der beiden Varianten ist dadurch gekennzeichnet, daß man eine Diazokomponente des Farbstoffes, die eine

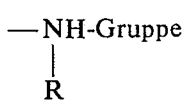

enthält mit einer Verbindung der Formel (5) kondensiert, das erhaltene Kondensationsprodukt diazotiert und auf eine Kupplungskomponente kuppelt, und nach der Kondensation oder nach der Kupplung mit einem Amin der Formel (6) kondensiert.

Die zweite Variante ist dadurch gekennzeichnet, daß man eine Kupplungskomponente des Farbstoffes, die eine

$-\underset{\substack{|\\ R}}{N}H$-Gruppe

enthält mit einer Verbindung der Formel (5) kondensiert, und auf das so erhaltene Kondensationsprodukt eine diazotierte Diazokomponente kuppelt, und nach der Kondensation oder nach der Kupplung mit einem Amin der Formel (6) kondensiert.

Nach dieser Herstellungsvariante können Reaktivfarbstoffe der Formel (1), die zwei Reaktivreste enthalten, hergestellt werden, indem man eine Diazokomponente, die eine

$-\underset{\substack{|\\ R}}{N}H$-Gruppe

enthält, mit einer Verbindung der Formel (5) kondensiert, daß man ferner eine Kupplungskomponente, die eine

$-\underset{\substack{|\\ R}}{N}H$-Gruppe

enthält, mit einer Verbindung der Formel (5) kondensiert, und daß man das Kondensationsprodukt der Diazokomponente diazotiert und auf das Kondensationsprodukt der Kupplungskomponente kuppelt, wobei das R im Kondensationsprodukt der Diazokomponente unabhängig ist von dem R im Kondensationsprodukt der Kupplungskomponente, und vor oder nach der Kupplung mit zwei Äquivalenten eines Amins der Formel (6) kondensiert.

Farbstoffe, die zwei Reaktivreste enthalten, sind auch in der Weise herstellbar, daß man Farbstoffe der Formel (4), die in D weitere

$-\underset{\substack{|\\ R}}{N}H$-Gruppen

enthalten, mit einer entsprechenden Menge des Acylierungsmittels der Formel (5) kondensiert, so daß zwei entsprechende Reste in das Farbstoffmolekül eingeführt werden, und dann mit einer entsprechenden Menge eines Amins der Formel (6) kondensiert.

Eine bevorzugte Ausführungsform ist dadurch gekennzeichnet, daß man organische Farbstoffe der Formel

$$\left[K-N=N-D_1\right]\!-\!\left[NH_2\right]_{1-2} \qquad (7)$$

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, mit einer Verbindung der Formel (5) kondensiert, wobei die Kondensation an der $NH_2$-Gruppe der Diazokomponente oder an der $NH_2$-Gruppe der Kupplungskomponente erfolgt, oder mit zwei Mol der Verbindung der Formel (5) kondensiert, wobei die Kondensation an der $NH_2$-Gruppe der Diazokomponente und an der $NH_2$-Gruppe der Kupplungskomponente erfolgt, und zuletzt mit einem oder zwei Mol eines Amins der Formel (6) kondensiert.

Nach einer weiteren bevorzugten Herstellungsweise verwendet man Verbindungen der Formel (4), worin D der Rest eines Metallkomplexazofarbstoffes ist.

Ein bevorzugtes Verfahren zur Herstellung von Reaktiv-Metallkomplexazofarbstoffen ist dadurch gekennzeichnet, daß man Verbindungen der Formel (4), worin D der Rest eines Azofarbstoffes der Benzol- oder Naphthalinreihe ist, der metallisierbare Gruppen in ortho-Position zur Azobrücke enthält, mit schwermetallabgebenden Mitteln, einer Verbindung der Formel (5) und einem Amin der Formel (6) umsetzt.

Bevorzugt ist ferner ein Verfahren, nach dem man einen Monoazofarbstoff der Benzol- oder Naphthalinreihe, der in ortho-Position zur Azobrücke metallisierbare Gruppen enthält, mit kupferabgebenden Mitteln zu einem 1 : 1-Kupferkomplexazofarbstoff umsetzt, und diesen mit einer Verbindung der Formel (5) kondensiert, und das Kondensationsprodukt mit einem Amin der Formel (6) kondensiert.

Die als Ausgangsstoffe verwendeten Farbstoffe der Formel (4) können im Rest D wie weiter vorn beschrieben substituiert sein. Vorzugsweise geht man von organischen Farbstoffen der Formel (4) aus, worin D der Rest eines Azofarbstoffes ist, der als Substituenten Methyl, Äthyl, Methoxy, Benzoylamino, Amino, Acetylamino, Ureido, Sulfomethyl, Hydroxy, Carboxy, Halogen und Sulfo enthalten kann.

Bei dem im vorangehenden beschriebenen Verfahren können die einzelnen Verfahrensschritte in

unterschiedlicher Reihenfolge, gegebenenfalls teilweise auch gleichzeitig ausgeführt werden. Dabei sind verschiedene Verfahrensvarianten möglich. Im allgemeinen führt man die Umsetzung schrittweise nacheinander aus, wobei die Reihenfolge der einfachen Reaktion zwischen den einzelnen Reaktionskomponenten frei gewählt werden kann.

Geht man, wie weiter vorn beschrieben, nicht von einem organischen Farbstoff der Formel (4) sondern von dessen Komponenten, z. B. von der Diazo- und Kupplungskomponente aus, so wird die Zahl der möglichen Ausführungsvarianten (Reaktionsfolgen) noch größer. Diese lassen sich aber aufgrund der gegebenen Beschreibung ohne weiteres angeben.

Die Kondensation der Verbindungen der Formel (5) mit den organischen Farbstoffen der Formel (4) bzw. den eine

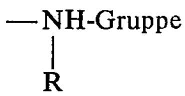

enthaltenden diazotierbaren und/oder kupplungsfähigen Komponenten erfolgen vorzugsweise in wäßriger Lösung oder Suspensionen, bei niedriger Temperatur, vorzugsweise zwischen 0 und 5°C und bei schwach saurem, neutralem bis schwach alkalischem pH-Wert. Vorteilhaft wird der bei der Kondensation freiwerdende Fluorwasserstoff laufend durch Zugabe wäßriger Alkalihydroxyde, -carbonate oder -bicarbonate neutralisiert.

Für die weitere Umsetzung der so erhaltenen Difluortriazinfarbstoffe mit den Aminen der Formel (6) setzt man die Amine zweckmäßigerweise in Form eines Salzes, bevorzugt in Form des Hydrochlorides, ein. Die Umsetzung wird bei Temperaturen etwa zwischen 5 und 40°, bevorzugt zwischen 5 und 25°, unter Zusatz säurebindender Mittel, bevorzugt Natriumcarbonat, in einem pH-Bereich von 2 bis 6,5, bevorzugt 5 bis 6,5 durchgeführt.

Als Farbstoffe der Formel (4) kommen besonders Farbstoffe der folgenden Strukturtypen in Betracht:

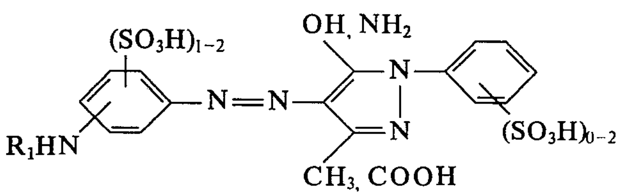

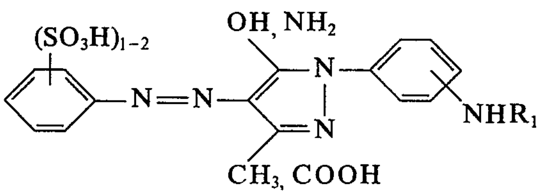

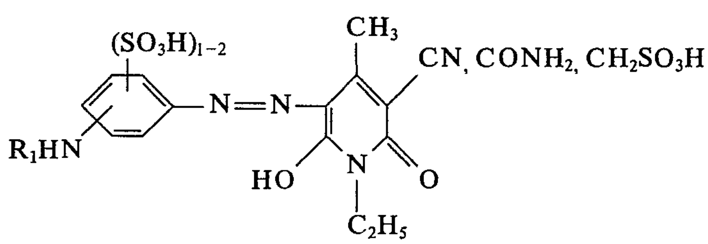

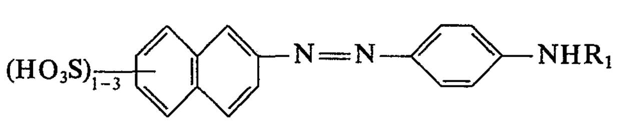

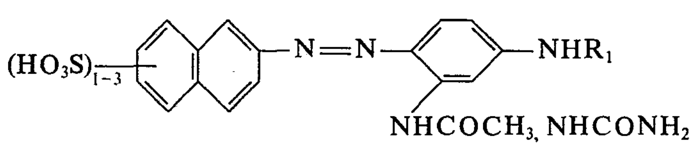

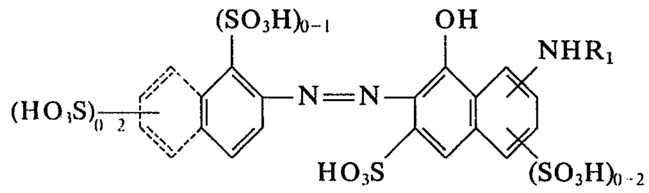

Metallkomplexe von Farbstoffen der Formeln:

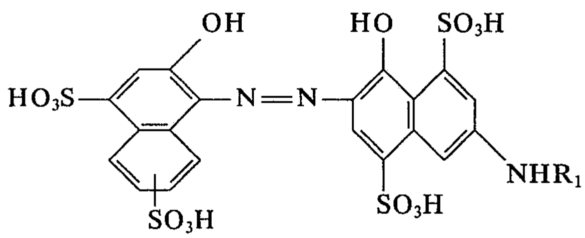

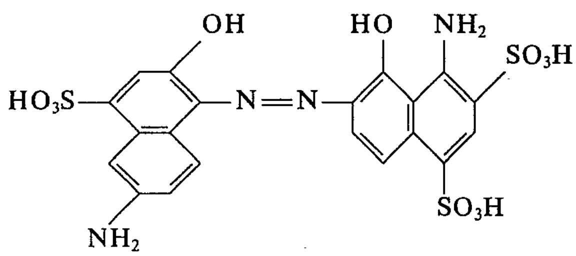

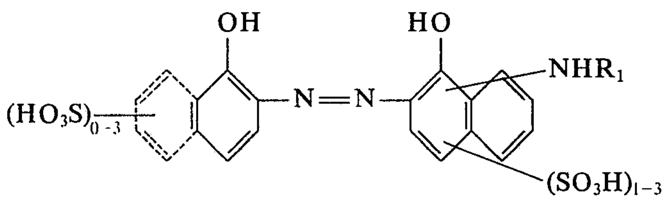

Als Metallatome sind Cu (1 : 1-Komplex) oder Cr und Co (1 : 2-Komplex) bevorzugt. Cr- und Co-Komplexe können die Azoverbindung der oben angegebenen Formel einmal oder zweimal enthalten, d. h. sie können symmetrisch oder mit beliebigen anderen Ligandengruppen unsymmetrisch aufgebaut sein.

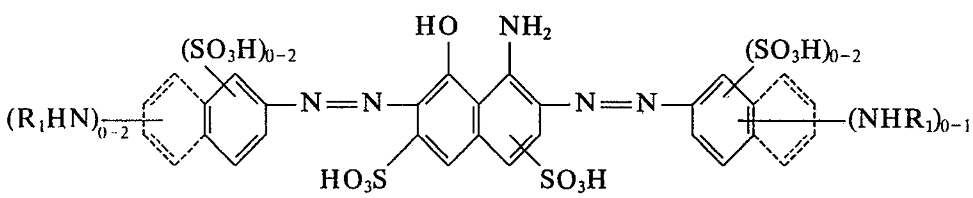

Die durch Strichelungen angedeuteten kondensierten Ringe stehen für alternativ mögliche Naphthalinsysteme.

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel (7) sind die folgenden:

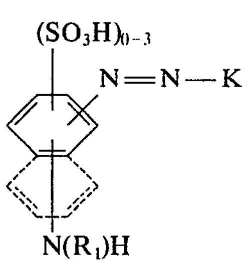

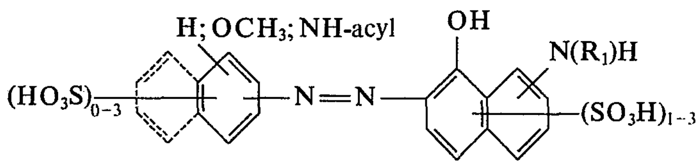

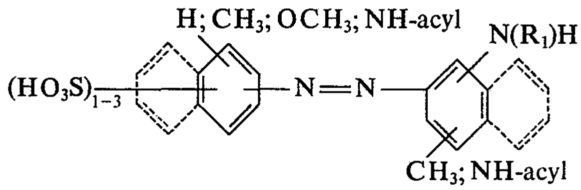

und

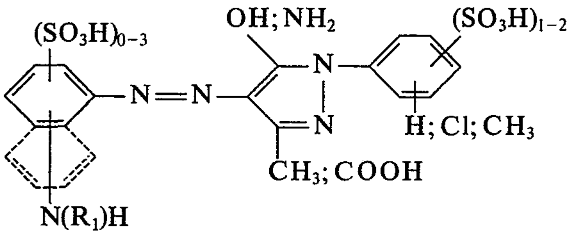

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und $R_1$ die bei der Erläuterung der Formel (I) angegebenen Bedeutung hat, sowie die Metallkomplex-Azofarbstoffe der Formeln

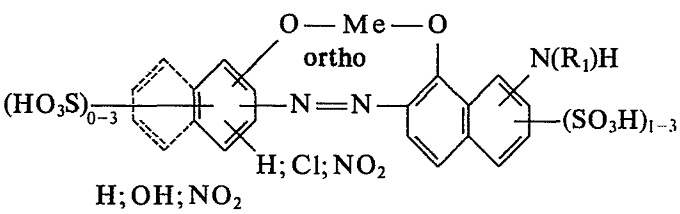

und

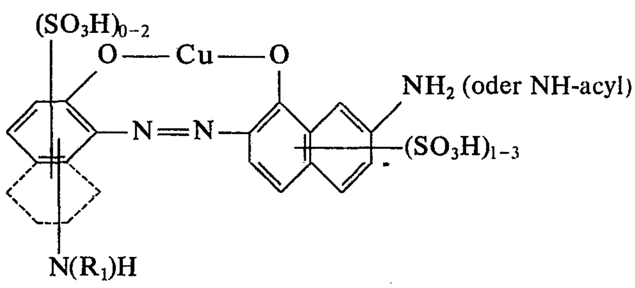

worin $R_1$ und acyl die oben angegebenen Bedeutungen haben und Me für Cu, Cr oder Co steht.

Bei der Herstellung der Reaktivfarbstoffe der Formel (1), worin D der Rest eines Azofarbstoffes, insbesondere eines Mono- oder Disazofarbstoffes, ist, erfolgt die Diazotierung der eine diazotierbare Aminogruppe enthaltenden Zwischenprodukte in der Regel durch Einwirkung salpetriger Säure in wäßrigmineralsaurer Lösung bei tiefer Temperatur, die Kupplung bei schwach sauren, neutralen bis schwach alkalischen pH-Werten.

Beispiele für Amine der Formel (6) sind:

β-(β-Chloräthyl-sulfonyl)-äthyl-amin,
β-(β-Bromäthyl-sulfonyl)-äthyl-amin,
β-Vinylsulfonyl-äthyl-amin,
γ-(β-Chloräthyl-sulfonyl)-propyl-amin,

α-(β-Chloräthyl-sulfonyl)-isopropyl-amin,
δ-(β-Chloräthyl-sulfonyl)-butyl-amin,
β-(β-Chloräthyl-sulfonyl)-isobutyl-amin,
ε-(β-Chloräthyl-sulfonyl)-pentyl-amin,
β-(β-Chloräthyl-sulfonyl)-hexyl-amin,
N-Methyl-N-β-(β-chloräthyl-sulfonyl)-äthyl-amin,
N-Äthyl-N-β-(β-chloräthyl-sulfonyl)-äthyl-amin,
N-Propyl-N-β-(β-chloräthyl-sulfonyl)-äthyl-amin,
N-Butyl-N-β-(β-chloräthyl-sulfonyl)-äthyl-amin,
N-Pentyl-N-β-(β-chloräthyl-sulfonyl)-äthyl-amin,
N-Hexyl-N-β-(β-chloräthyl-sulfonyl)-äthyl-amin,
N-Nonyl-N-β-(β-chloräthyl-sulfonyl)-äthyl-amin,
N-Dodecyl-N-β-(β-chloräthyl-sulfonyl)-äthyl-amin,
N-Hexadecyl-N-β-(β-chloräthyl-sulfonyl)-äthyl-amin,
N-Octadecyl-N-β-(β-chloräthyl-sulfonyl)-äthyl-amin,
N-Carboxymethyl-N-β-(β-bromäthyl-sulfonyl)-äthyl-amin,
N-Sulfatomethyl-N-β-(β-chloräthyl-sulfonyl)-äthyl-amin,
N-β-Carboxyäthyl-N-γ-(β-chloräthyl-sulfonyl)-propyl-amin,
N-β-Sulfatoäthyl-N-γ-(β-chloräthyl-sulfonyl)-propyl-amin,
N-β-Sulfatoäthyl-N-δ-(β-chloräthyl-sulfonyl)-butyl-amin,
N-β-Äthoxyäthyl-N-δ-(β-chloräthyl-sulfonyl)-butyl-amin,
N-γ-Chlorpropyl-N-β-(β-chloräthyl-sulfonyl)-äthyl-amin,
N-Phenyl-N-β-(β-chloräthyl-sulfonyl)-äthyl-amin,
N-p-Chlorphenyl-N-β-(β-chloräthyl-sulfonyl)-äthyl-amin,
N-o-Methylphenyl-N-β-(β-chloräthyl-sulfonyl)-äthyl-amin,
N-p-Methoxyphenyl-N-β-(β-chloräthyl-sulfonyl)-äthyl-amin,
N-m-Sulfophenyl-N-β-(β-chloräthyl-sulfonyl)-äthyl-amin,
N-p-Sulfophenyl-N-β-(β-chloräthyl-sulfonyl)-äthyl-amin.

Bevorzugt sind die Amine von niederem Molekulargewicht wie das β-(β-Chloräthyl-sulfonyl)-äthyl-amin und sein N-Methylderivat.

Die Reaktivfarbstoffe der Formel (1) eignen sich zum Färben und Bedrucken von verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Padsteam-Verfahren nur kurze Dämpfzeiten. Sie ergeben Färbungen mit guten Naß- und Lichtechtheiten und hoher Farbstärke und bemerkenswert hoher Faser-Farbstoff-Bindungsstabilität, sowohl in saurem als auch in alkalischem Bereich.

Die Reaktivfarbstoffe der Formel (1) eignen sich besonders zum Färben von Baumwolle nach dem Ausziehfärbeverfahren, wobei die Differenz zwischen Ausziehgrad und Fixiergrad bemerkenswert klein, d. h. der Seifverlust sehr gering ist.

Die Reaktivfarbstoffe der Formel (1) eignen sich auch zum Druck, insbesondere auf Baumwolle, ebenso aber auch zum Bedrucken von stickstoffhaltigen Fasern, z. B. von Wolle, Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen.

Die Herstellung der Monoazo- oder Disazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

## Beispiel 1

54,5 g des Aminoazofarbstoffs der Formel 3,6,8-Trisulfonaphthalin <2 azo 4>-1-amino-3-ureidobenzol werden in 800 ml Wasser von 20°C neutral gelöst. Man kühlt durch Zugabe von Eis auf 0°C und tropft bei dieser Temperatur innert 15 Minuten 14,2 g 2,4,6-Trifluor-1,3,5-triazin ein, wobei man den freiwerdenden Fluorwasserstoff durch Zutropfen von 2 N Natriumhydroxydlösung in dem Maße

abstumpft, daß der pH-Wert der Reaktionslösung zwischen 5 und 6 liegt. Sobald chromatographisch kein Ausgangsfarbstoff mehr nachweisbar ist, werden 21,8 g β-(β-Chloräthyl-sulfonyl)-äthyl-amin-hydrochlorid zugegeben. Unter ständigem Neutralisieren des freigesetzten Fluorwasserstoffs mit 2 N Natriumcarbonatlösung und langsamem Erhöhen der Temperatur auf 20°C wird ein pH-Wert von 5 eingehalten. Nach 90 Minuten ist die Umsetzung beendet, worauf der Farbstoff der Formel

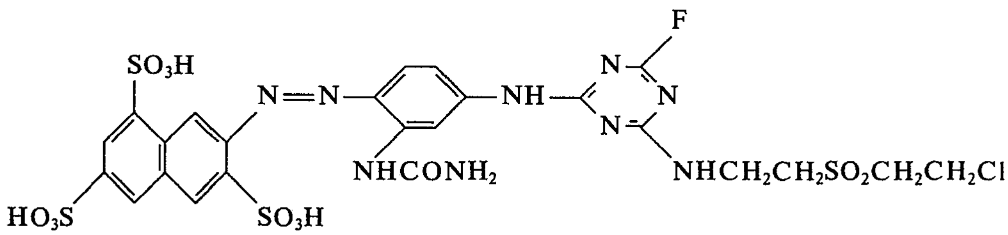

durch Zugabe von Natriumchlorid ausgesalzen, abfiltriert, getrocknet und gemahlen wird. Man erhält ein oranges Farbstoffpulver, das sich in Wasser mit rotgelber Farbe löst und das Baumwolle oder regenerierte Cellulose in rotstichig gelben Tönen färbt.

Wenn man nach den Angaben von Beispiel 1 verfährt, jedoch anstelle des dort verwendeten Aminoazofarbstoffes äquivalente Mengen der in nachfolgender Tabelle 1 aufgeführten Aminoazofarbstoffe und Amine verwendet, so resultieren gleichfalls wertvolle Farbstoffe, die Baumwolle in gelben bis rotstichig gelben Tönen färben.

Tabelle 1

| Nr. | Aminoazoverbindung aus<br>Diazokomponente | <br>Kupplungskomponente | Amin |
|---|---|---|---|
| 2 | 1-Aminonaphthalin-3,7-disulfonsäure | Aminobenzol | N-β-Sulfatoäthyl-N-γ-(β-chloräthyl-sulfonyl)-propyl-amin |
| 3 | desgl. | 1-Amino-3-methylbenzol | N-β-Carboxyäthyl-N-γ-(β-chloräthyl-sulfonyl)-propyl-amin |
| 4 | desgl. | 3-Aminophenylharnstoff | β-(β-Chloräthyl-sulfonyl)-äthyl-amin |
| 5 | desgl. | 1-Amino-3-hydroxyacetyl-amino-benzol | desgl. |
| 6 | desgl. | 1-Amino-3-acetylamino-6-methoxy-benzol | desgl. |
| 7 | desgl. | 1-Amino-3-acetylamino-6-methyl-benzol | desgl. |
| 8 | desgl. | 1-Amino-3-acetylamino-benzol | desgl. |
| 9 | desgl. | 1-Amino-3-methyl-6-methoxy-benzol | desgl. |
| 10 | desgl. | 1-Amino-3-ureido-6-methyl-benzol | desgl. |
| 11 | desgl. | 1-Äthylamino-3-methyl-benzol | desgl. |
| 12 | desgl. | 1-Amino-2-methylbenzol | desgl. |

Fortsetzung

| Nr. | Aminoazoverbindung aus Diazokomponente | Kupplungskomponente | Amin |
|---|---|---|---|
| 13 | 1-Aminonaphthalin-3,7-disulfonsäure | 1-Amino-2,5-dimethylbenzol | β-(β-Chloräthyl-sulfonyl)-äthyl-amin |
| 14 | 1-Aminonaphthalin-3,6-disulfonsäure | Aminobenzol | γ-(β-Chloräthyl-sulfonyl)-propyl-amin |
| 15 | desgl. | 1-Amino-3-methylbenzol | β-(β-Chloräthyl-sulfonyl)-äthyl-amin |
| 16 | desgl. | 3-Aminophenylharnstoff | desgl. |
| 17 | desgl. | 1-Amino-3-hydroxyacetyl-amino-benzol | desgl. |
| 18 | desgl. | 1-Amino-3-acetylamino-6-methoxy-benzol | desgl. |
| 19 | desgl. | 1-Amino-3-acetylamino-6-methyl-benzol | desgl. |
| 20 | desgl. | 1-Amino-3-acetylamino-benzol | desgl. |
| 21 | desgl. | 1-Amino-3-methyl-6-methoxy-benzol | desgl. |
| 22 | desgl. | 1-Amino-3-ureido-6-methyl-benzol | desgl. |
| 23 | desgl. | 1-Äthylamino-3-methyl-benzol | desgl. |
| 24 | desgl. | 1-Amino-2-methylbenzol | desgl. |
| 25 | desgl. | 1-Amino-2,5-dimethylbenzol | desgl. |
| 26 | 1-Aminonaphthalin-2,5,7-trisulfonsäure | Aminobenzol | desgl. |
| 27 | desgl. | 1-Amino-3-methylbenzol | desgl. |
| 28 | desgl. | 3-Aminophenylharnstoff | β-Vinylsulfonyl-äthyl-amin |
| 29 | desgl. | 1-Amino-3-hydroxyacetyl-amino-benzol | N-Butyl-N-β-(β-chloräthyl-sulfonyl)-äthyl-amin |
| 30 | desgl. | 1-Amino-3-acetylamino-6-methoxy-benzol | N-Phenyl-N-β-(β-chloräthyl-sulfonyl)-äthyl-amin |
| 31 | desgl. | 1-Amino-3-acetylamino-6-methyl-benzol | N-p-Chlorphenyl-N-β-(β-chlor äthyl-sulfonyl)-äthyl-amin |
| 32 | desgl. | 1-Amino-3-acetylamino-benzol | N-Carboxymethyl-N-β-(β-chloräthyl-sulfonyl)-äthyl-amir |
| 33 | desgl. | 1-Amino-3-methyl-6-methoxy-benzol | N-Methyl-N-β-(β-chloräthyl-sulfonyl)-äthyl-amin |

Fortsetzung

| Nr. | Aminoazoverbindung aus Diazokomponente | Kupplungskomponente | Amin |
|---|---|---|---|
| 34 | 1-Aminonaphthalin-2,5,7-trisulfonsäure | 1-Amino-3-ureido-6-methyl-benzol | N-o-Methylphenyl-N-β-(β-chloräthyl-sulfonyl)-äthyl-amin |
| 35 | desgl. | N-Äthylanilin | desgl. |
| 36 | desgl. | 1-Äthylamino-3-methyl-benzol | β-(β-Chloräthyl-sulfonyl)-äthyl-amin |
| 37 | desgl. | 1-Amino-2-methylbenzol | desgl. |
| 38 | desgl. | 1-Amino-2,5-dimethylbenzol | desgl. |
| 39 | 2-Aminonaphthalin-5,7-disulfonsäure | Aminobenzol | desgl. |
| 40 | desgl. | 1-Amino-3-methylbenzol | desgl. |
| 41 | desgl. | 3-Aminophenylharnstoff | desgl. |
| 42 | desgl. | 1-Amino-3-hydroxyacetyl-aminobenzol | desgl. |
| 43 | desgl. | 1-Amino-3-methanacetyl-aminobenzol | desgl. |
| 44 | desgl. | 1-Amino-2,5-dimethoxy-benzol | desgl. |
| 45 | desgl. | 1-Amino-3-methyl-6-methoxy-benzol | desgl. |
| 46 | desgl. | 1-Amino-3-ureido-6-methyl-benzol | desgl. |
| 47 | desgl. | N-Äthylanilin | desgl. |
| 48 | desgl. | 1-Äthylamino-3-methyl-benzol | desgl. |
| 49 | desgl. | 1-Amino-2-methylbenzol | desgl. |
| 50 | desgl. | 1-Amino-2,5-dimethylbenzol | desgl. |
| 51 | 2-Aminonaphthalin-4,8-disulfonsäure | Aminobenzol | desgl. |
| 52 | desgl. | 1-Amino-3-methylbenzol | desgl. |
| 53 | desgl. | 3-Aminophenylharnstoff | desgl. |
| 54 | desgl. | 1-Amino-3-hydroxyacetyl-aminobenzol | desgl. |
| 55 | desgl. | 1-Amino-3-acetylamino-6-methoxy-benzol | desgl. |

Fortsetzung

| Nr. | Aminoazoverbindung aus Diazokomponente | Kupplungskomponente | Amin |
|---|---|---|---|
| 56 | 2-Aminonaphthalin-4,8-disulfonsäure | 1-Amino-3-acetylamino-6-methyl-benzol | β-(β-Chloräthyl-sulfonyl)-äthyl-amin |
| 57 | desgl. | 1-Amino-3-acetylamino-benzol | desgl. |
| 58 | desgl. | 1-Amino-3-methyl-6-methoxy-benzol | desgl. |
| 59 | desgl. | 1-Amino-3-ureido-6-methylbenzol | desgl. |
| 60 | desgl. | N-Äthylanilin | desgl. |
| 61 | desgl. | 1-Äthylamino-3-methyl-benzol | desgl. |
| 62 | desgl. | 1-Amino-2-methylbenzol | desgl. |
| 63 | desgl. | 1-Amino-2,5-dimethylbenzol | desgl. |
| 64 | 2-Aminonaphthalin-4,6,8-trisulfonsäure | Aminobenzol | desgl. |
| 65 | desgl. | 1-Amino-3-methylbenzol | desgl. |
| 66 | desgl. | 3-Aminophenylharnstoff | desgl. |
| 67 | desgl. | 1-Amino-3-hydroxyacetyl-aminobenzol | desgl. |
| 68 | desgl. | 1-Amino-3-acetylamino-6-methoxybenzol | desgl. |
| 69 | desgl. | 1-Amino-3-acetylamino-6-methylbenzol | desgl. |
| 70 | desgl. | 1-Amino-3-acetylamino-benzol | desgl. |
| 71 | desgl. | 1-Amino-3-methyl-6-methoxybenzol | desgl. |
| 72 | desgl. | 1-Amino-3-ureido-6-methylbenzol | desgl. |
| 73 | desgl. | N-Äthylanilin | desgl. |
| 74 | desgl. | 1-Äthylamino-3-methyl-benzol | desgl. |
| 75 | desgl. | 1-Amino-2-methylbenzol | desgl. |
| 76 | desgl. | 1-Amino-2,5-dimethylbenzol | desgl. |
| 77 | 2-Aminonaphthalin-3,6,8-trisulfonsäure | Aminobenzol | desgl. |

Fortsetzung

| Nr. | Aminoazoverbindung aus Diazokomponente | Kupplungskomponente | Amin |
|---|---|---|---|
| 78 | 2-Aminonaphthalin-3,6,8-trisulfonsäure | 1-Amino-3-methylbenzol | β-(β-Chloräthyl-sulfonyl)-äthyl-amin |
| 79 | desgl. | 1-Amino-3-hydroxyacetyl-aminobenzol | desgl. |
| 80 | desgl. | 1-Amino-3-acetylamino-6-methoxybenzol | desgl. |
| 81 | desgl. | 1-Amino-3-acetylamino-6-methylbenzol | desgl. |
| 82 | desgl. | 1-Amino-3-acetylamino-benzol | desgl. |
| 83 | desgl. | 1-Amino-3-methyl-6-methoxybenzol | desgl. |
| 84 | desgl. | 1-Amino-3-ureido-6-methyl-benzol | desgl. |
| 85 | desgl. | N-Äthylanilin | desgl. |
| 86 | desgl. | 1-Äthylamino-3-methyl-benzol | desgl. |
| 87 | desgl. | 1-Amino-2-methylbenzol | desgl. |
| 88 | desgl. | 1-Amino-2,5-dimethylbenzol | desgl. |
| 89 | 1-Aminobenzol-2,5-disulfonsäure | Aminobenzol | desgl. |
| 90 | desgl. | 1-Amino-3-methylbenzol | desgl. |
| 91 | desgl. | 3-Aminophenylharnstoff | desgl. |
| 92 | desgl. | 1-Amino-3-hydroxyacetyl-aminobenzol | desgl. |
| 93 | desgl. | 1-Amino-3-acetylamino-6-methoxybenzol | desgl. |
| 94 | desgl. | 1-Amino-3-acetylamino-6-methylbenzol | desgl. |
| 95 | desgl. | 1-Amino-3-acetylamino-benzol | desgl. |
| 96 | desgl. | 1-Amino-3-methyl-6-methoxybenzol | desgl. |
| 97 | desgl. | 1-Amino-3-ureido-6-methylbenzol | desgl. |
| 98 | desgl. | N-Äthylanilin | desgl. |

Fortsetzung

| Nr. | Aminoazoverbindung aus Diazokomponente | Kupplungskomponente | Amin |
|---|---|---|---|
| 99 | 1-Aminobenzol-2,5-disulfonsäure | 1-Äthylamino-3-methylbenzol | β-(β-Chloräthyl-sulfonyl)-äthyl-amin |
| 100 | desgl. | 1-Amino-2-methylbenzol | desgl. |
| 101 | desgl. | 1-Amino-2,5-dimethylbenzol | desgl. |
| 102 | Anilin-2,4-disulfonsäure | Aminobenzol | desgl. |
| 103 | desgl. | 1-Amino-3-methylbenzol | desgl. |
| 104 | desgl. | 3-Aminophenylharnstoff | desgl. |
| 105 | desgl. | 1-Amino-3-hydroxyacetyl-aminobenzol | desgl. |
| 106 | desgl. | 1-Amino-3-acetylamino-6-methoxybenzol | desgl. |
| 107 | desgl. | 1-Amino-3-acetylamino-6-methylbenzol | desgl. |
| 108 | desgl. | 1-Amino-3-acetylamino-benzol | desgl. |
| 109 | desgl. | 1-Amino-3-methyl-6-methoxybenzol | desgl. |
| 110 | desgl. | 1-Amino-3-ureido-6-methyl-benzol | desgl. |
| 111 | desgl. | N-Äthylanilin | desgl. |
| 112 | desgl. | 1-Äthylamino-3-methyl-benzol | desgl. |
| 113 | desgl. | 1-Amino-2-methylbenzol | desgl. |
| 114 | desgl. | 1-Amino-2,5-dimethylbenzol | desgl. |
| 115 | 1-Amino-2,5-disulfo-4-methoxy-benzol | Aminobenzol | desgl. |
| 116 | desgl. | 1-Amino-3-methylbenzol | desgl. |
| 117 | desgl. | 3-Aminophenylharnstoff | desgl. |
| 118 | desgl. | 1-Amino-3-hydroxyacetyl-aminobenzol | desgl. |
| 119 | desgl. | 1-Amino-3-acetylamino-6-methoxybenzol | desgl. |
| 120 | desgl. | 1-Amino-3-acetylamino-6-methylbenzol | desgl. |

Fortsetzung

| Nr. | Aminoazoverbindung aus Diazokomponente | Kupplungskomponente | Amin |
|---|---|---|---|
| 121 | 1-Amino-2,5-disulfo-4-methoxy-benzol | 1-Amino-3-acetylamino-benzol | β-(β-Chloräthyl-sulfonyl)-äthyl-amin |
| 122 | desgl. | 1-Amino-3-methyl-6-methoxybenzol | desgl. |
| 123 | desgl. | 1-Amino-3-ureido-6-methyl-benzol | desgl. |
| 124 | desgl. | N-Äthylanilin | desgl. |
| 125 | desgl. | 1-Äthylamino-3-methyl-benzol | desgl. |
| 126 | desgl. | 1-Amino-2-methylbenzol | desgl. |
| 127 | desgl. | 1-Amino-2,5-dimethylbenzol | desgl. |
| 128 | 1-Amino-2,4-disulfo-6-methyl-benzol | Aminobenzol | desgl. |
| 129 | desgl. | 1-Amino-3-methylbenzol | desgl. |
| 130 | desgl. | 3-Aminophenylharnstoff | desgl. |
| 131 | desgl. | 1-Amino-3-hydroxyacetyl-aminobenzol | desgl. |
| 132 | desgl. | 1-Amino-3-acetylamino-6-methoxybenzol | desgl. |
| 133 | desgl. | 1-Amino-3-acetylamino-6-methylbenzol | desgl. |
| 134 | desgl. | 1-Amino-3-acetylamino-benzol | desgl. |
| 135 | desgl. | 1-Amino-3-methyl-6-methoxybenzol | desgl. |
| 136 | desgl. | 1-Amino-3-ureido-6-methyl-benzol | desgl. |
| 137 | desgl. | N-Äthylanilin | desgl. |
| 138 | desgl. | 1-Äthylamino-3-methyl-benzol | desgl. |
| 139 | desgl. | 1-Amino-2-methylbenzol | desgl. |
| 140 | desgl. | 1-Amino-2,5-dimethylbenzol | desgl. |
| 141 | 1-Amino-benzol-4-sulfon-säure | Aminobenzol | desgl. |
| 142 | desgl. | 1-Amino-3-methylbenzol | desgl. |

Fortsetzung

| Nr. | Aminoazoverbindung aus Diazokomponente | Kupplungskomponente | Amin |
|---|---|---|---|
| 143 | 1-Amino-benzol-4-sulfonsäure | 3-Aminophenylharnstoff | β-(β-Chloräthyl-sulfonyl)-äthyl-amin |
| 144 | desgl. | 1-Amino-3-hydroxacetyl-aminobenzol | desgl. |
| 145 | desgl. | 1-Amino-3-acetylamino-6-methoxybenzol | desgl. |
| 146 | desgl. | 1-Amino-3-acetylamino-6-methylbenzol | desgl. |
| 147 | desgl. | 1-Amino-3-acetylamino-benzol | desgl. |
| 148 | desgl. | 1-Amino-3-methyl-6-methoxybenzol | desgl. |
| 149 | desgl. | 1-Amino-3-ureido-6-methyl-benzol | desgl. |
| 150 | desgl. | N-Äthylanilin | desgl. |
| 151 | desgl. | 1-Äthylamino-3-methyl-benzol | desgl. |
| 152 | desgl. | 1-Amino-2-methylbenzol | desgl. |
| 153 | desgl. | 1-Amino-2,5-dimethyl-benzol | desgl. |

Beispiel 154

26,6 g des Aminoazofarbstoffes der Formel 4-Methoxy-2,5-disulfobenzol <1 azo >1-hydroxy-3-sulfo-6-aminonaphthalin werden in 500 ml Wasser neutral gelöst. Bei 0°C werden 7,1 g 2,4,6-Trifluor-1,3,5-triazin zugetropft, wobei gleichzeitig 2 N Natronlauge zugegeben wird, um den pH-Wert bei 5—6 zu halten. Nach Zugabe des 2,4,6-Trifluor-1,3,5-triazins rührt man noch 5 bis 10 Minuten nach und gibt dann 10,8 g β-(β-Chloräthyl-sulfonyl)-äthyl-amin-hydrochlorid zu. Man läßt die Temperatur auf 20°C ansteigen und hält dabei den pH bei 5—6 durch Zugabe von 2 N Natriumcarbonatlösung. Die Acylierung ist beendet, wenn kein Alkali mehr verbraucht wird. Der Farbstoff der Formel

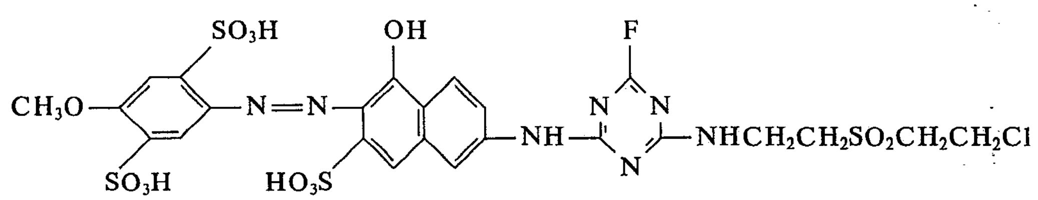

wird durch Zugabe von Natriumchlorid abgeschieden. Nach dem Absaugen, Trocknen und Mahlen erhält man ein hellrotes Farbstoffpulver, das sich in Wasser in gelbstichig roter Farbe löst.

Wenn man wie oben angegeben verfährt, jedoch anstelle des dort eingesetzten Aminoazofarbstoffes äquivalente Mengen der in der nachfolgenden Tabelle 2 in Spalte 2 aufgeführten Aminoazofarbstoffe und der in Spalte 3 erwähnten Amine einsetzt, erhält man ebenfalls wertvolle neue Reaktivfarbstoffe. In der Tabelle bedeutet der Ausdruck »verseift« daß eine im Aminoazofarbstoff enthaltene Acylaminogruppe nachträglich verseift worden ist, während der Ausdruck »reduziert« besagt, daß eine in der

Diazokomponente enthaltene Nitrogruppe nach der Kupplung zur Aminogruppe reduziert wird, wobei sich der gewünschte Aminoazofarbstoff bildet.

Tabelle 2

| Nr. | Aminoazofarbstoff | Amin | Farbton auf Baumwolle |
|---|---|---|---|
| 155 | 1-Amino-3-acetylaminobenzol-6-sulfonsäure → 1-(2'-Chlor-4'-sulfophenyl)-3-methyl-pyrazolon-5, verseift. | β-(β-Bromäthyl-sulfonyl)-äthyl-amin | Gelb |
| 156 | 1-Amino-3-acetylaminobenzol-6-sulfonsäure → 1-(2'-Methyl-4'-sulfonyl)-3-methyl-pyrazolon-5, verseift. | β-Vinylsulfonyl-äthyl-amin | Gelb |
| 157 | 1-Amino-3-acetylaminobenzol-6-sulfonsäure → 1-(3'-Sulfophenyl)-3-methyl-pyrazolon-5, verseift. | γ-(β-Chloräthyl-sulfonyl)-propyl-amin | Gelb |
| 158 | 1-Amino-3-acetylaminobenzol-6-sulfonsäure → 1-(4'-Sulfophenyl)-3-methyl-pyrazolon-5, verseift. | β-(β-Chloräthyl-sulfonyl)-äthyl-amin | Gelb |
| 159 | desgl. | δ-(β-Chloräthyl-sulfonyl)-butyl-amin | Gelb |
| 160 | desgl. | N-Carboxymethyl-N-β-(β-chloräthyl-sulfonyl)-äthyl-amin | Gelb |
| 161 | desgl. | N-γ-Chlorpropyl-N-β-(β-chloräthyl-sulfonyl)-äthyl-amin | Gelb |
| 162 | 1-Amino-3-acetylaminobenzol-6-sulfonsäure → 1-(2',5'-dichlor-4'-sulfophenyl)-3-methyl-pyrazolon-5, verseift. | desgl. | Gelb |
| 163 | 1-Amino-3-acetylaminobenzol-6-sulfonsäure → 1-(2'-Methyl-4'-sulfophenyl)-3-carboxy-pyrazolon-5, verseift. | N-Methyl-N-β-(β-chloräthyl-sulfonyl)-äthyl-amin | Gelb |
| 164 | 1-Amino-3-acetylaminobenzol-6-sulfonsäure → 1-(4'-Sulfophenyl)-3-carboxy-pyrazolon-5, verseift. | β-(β-Chloräthyl-sulfonyl)-äthyl-amin | Gelb |
| 165 | desgl. | γ-(β-Chloräthyl-sulfonyl)-propyl]-amin | Gelb |
| 166 | 1-Amino-3-acetylaminobenzol-6-sulfonsäure → 1-(4',8'-Disulfonaphthyl-2')-3-methyl-pyrazolon-5, verseift. | β-(β-Chloräthyl-sulfonyl)-äthyl-amin | Gelb |
| 167 | 1-Amino-4-acetylaminobenzol-2-sulfonsäure → 1-(4'-Sulfophenyl)-3-methyl-pyrazolon-5, verseift. | desgl. | Gelb |
| 168 | 1-Amino-4-acetylaminobenzol-2-sulfonsäure → 1-(3'-Sulfophenyl)-3-methyl-pyrazolon-5, verseift. | N-Äthyl-N-β-(β-chloräthyl-sulfonyl)-äthyl-amin | Gelb |

Fortsetzung

| Nr. | Aminoazofarbstoff | Amin | Farbton auf Baumwolle |
|---|---|---|---|
| 169 | 1-Amino-4-acetylaminobenzol-2-sulfonsäure → 1-(4'-Sulfophenyl)-3-carboxy-pyrazolon-5, verseift. | N-m-Sulfophenyl-N-β-(β-chloräthyl-sulfonyl)-äthyl-amin | Gelb |
| 170 | 1-Amino-4-acetylaminobenzol-2-sulfonsäure → 1-(3'-Sulfophenyl)-3-carboxy-pyrazolon-5, verseift. | β-(β-Chloräthyl-sulfonyl)-iso-butyl-amin | Gelb |
| 171 | 1-Aminobenzol-2,4-disulfonsäure → 3-Methyl-1-[6'-amino-4',8'-disulfonaph-thyl-(2')]-5-pyrazolon | β-(β-Chloräthyl-sulfonyl)-äthyl-amin | Gelb |
| 172 | 1,4-Diaminobenzol-2,5-disulfonsäure → 1-(2'-Chlor-5'-sulfophenyl)-3-methyl-pyrazolon-5 | desgl. | Gelb |
| 173 | 1-Aminobenzol-2,4-disulfonsäure → 1-(3'-Aminophenyl)-3-methyl-pyrazolon-5 | desgl. | Gelb |
| 174 | 1-Amino-4-nitrobenzol-2-sulfonsäure → (4-Amino-3,5-disulfophenyl)-aceto-acetanilid, reduziert. | desgl. | Gelb |
| 175 | 1,4-Diaminobenzol-2,5-disulfonsäure → 1-Äthyl-3-sulfomethyl-4-methyl-6-hydroxypyridon-(2)-5-carbonsäureamid | desgl. | Gelb |
| 176 | 1-Amino-3-acetylaminobenzol-6-sulfonsäure → 1-Äthyl-3-sulfomethyl-4-methyl-6-hydroxypyridin-(2)-5-carbonsäureamid, verseift. | desgl. | grünst. Gelb |
| 177 | 1-Amino-3-acetylaminobenzol-6-sulfonsäure → 1-Äthyl-3-aminocarbonyl-4-methyl-6-hydroxypyridon-(2), verseift. | N-β-Sulfatoäthyl-N-β-(β-chloräthyl-sulfonyl)-äthyl-amin | grünst. Gelb |
| 178 | 2-Amino-1-sulfo-5-aminomethyl-naphthalin → 1-Äthyl-3-sulfomethyl-4-methyl-6-hydroxypyridin-(2)-5-carbonsäureamid | β-(β-Chloräthyl-sulfonyl)-äthyl-amin | Gelb |
| 179 | 2-Amino-1-sulfo-5-methylaminomethyl-naphthalin → 1-Äthyl-3-sulfomethyl-4-methyl-6-hydroxypyridon-(2)-5-carbon-säureamid | α-(β-Chloräthyl-sulfonyl)-isopropyl-amin | Gelb |
| 180 | 2-Amino-1-sulfo-5-aminomethyl-naphthalin → 1-Äthyl-3-aminocarbonyl-4-methyl-6-hydroxypyridon-(2) | β-(β-Chloräthyl-sulfonyl)-äthyl-amin | Gelb |
| 181 | 2-Amino-5-aminomethyl-1,7-disulfonaph-thalin → 1-Äthyl-3-sulfomethyl-4-methyl-6-hydroxypyridon-(2)-5-carbonsäureamid | desgl. | Gelb |
| 182 | 2-Amino-5-aminomethyl-1,7-disulfonaph-thalin → 1-Äthyl-3-aminocarbonyl-4-methyl-6-hydroxypyridon-(2) | desgl. | Gelb |

Fortsetzung

| Nr. | Aminoazofarbstoff | Amin | Farbton auf Baumwolle |
|---|---|---|---|
| 183 | 2-Amino-5-methylaminomethyl-1,7-disulfonaphthalin → 1-Äthyl-3-aminocarbonyl-4-methyl-6-hydroxypyridon-(2) | β-(β-Chloräthyl-sulfonyl)-äthyl-amin | Gelb |
| 184 | 1-Amino-4-acetylaminobenzol-2-sulfonsäure → 1-Hydroxy-7-phenylaminonaphthalin-3,6-disulfonsäure, | desgl. | Braun |
| 185 | 1-Amino-4-acetylaminobenzol-2-sulfonsäure → 1-Hydroxy-7-(4'-sulfophenylamino)-naphthalin-3-sulfonsäure, verseift. | desgl. | Braun |
| 186 | 1-Aminobenzol-2-sulfonsäure → 2-Acetylamino-5-hydroxynaphthalin-7-sulfonsäure, verseift. | desgl. | Orange |
| 187 | 1-Aminobenzol-2-sulfonsäure → 2-Acetylamino-5-hydroxynaphthalin-1,7-disulfonsäure, verseift. | desgl. | Orange |
| 188 | 1-Amino-2-methylbenzol-4,6-disulfonsäure → 2-Acetylamino-5-hydroxynaphthalin-7-sulfonsäure, verseift. | desgl. | Orange |
| 189 | 1-Aminobenzol-2,4-disulfonsäure → 2-Acetylamino-5-hydroxynaphthalin-7-sulfonsäure, verseift. | desgl. | Orange |
| 190 | 1-Amino-2,5-dimethylbenzol-4-sulfonsäure- → 2-Acetylamino-5-hydroxynaphthalin-1,7-disulfonsäure, verseift. | desgl. | Orange |
| 191 | 1-Amino-4-methylbenzol-2-sulfonsäure → 2-Acetylamino-5-hydroxynaphthalin-1,7-disulfonsäure, verseift. | desgl. | Orange |
| 192 | 2-Aminonaphthalin-1-sulfonsäure → 2-Amino-5-hydroxynaphthalin-1,7-disulfonsäure | desgl. | Orange |
| 193 | 1-Amino-3-acetylaminobenzol-6-sulfonsäure → 2-Aminonaphthalin-5,7-disulfonsäure, verseift. | desgl. | Orange |
| 194 | 1-Amino-3-acetylaminobenzol-6-sulfonsäure → 2-Hydroxynaphthalin-6,8-disulfonsäure, verseift. | desgl. | Orange |
| 195 | 2-Aminonaphthalin-1,7-disulfonsäure → 2-Acetylamino-5-hydroxynaphthalin-7-sulfonsäure, verseift. | desgl. | Orange |
| 196 | 2-Aminonaphthalin-1,7-disulfonsäure → 2-Acetylamino-5-hydroxynaphthalin-1,7-disulfonsäure, verseift. | desgl. | Orange |

Fortsetzung

| Nr. | Aminoazofarbstoff | Amin | Farbton auf Baumwolle |
|---|---|---|---|
| 197 | 2-Aminonaphthalin-1,7-disulfonsäure → 2-Acetylamino-8-hydroxynaphthalin-6-sulfonsäure, verseift. | β-(β-Chloräthyl-sulfonyl)-äthyl-amin | Scharlach |
| 198 | 2-Aminonaphthalin-1,5-disulfonsäure → 2-Acetylamino-5-hydroxynaphthalin-7-sulfonsäure, verseift. | desgl. | Orange |
| 199 | 2-Aminonaphthalin-1,5-disulfonsäure → 2-N-Methyl-acetylamino-5-hydroxynaphthalin-7-sulfonsäure, verseift. | desgl. | Orange |
| 200 | 2-Aminonaphthalin-1,5-disulfonsäure → 2-Acetylamino-8-hydroxynaphthalin-6-sulfonsäure, verseift. | desgl. | Scharlach |
| 201 | 2-Aminonaphthalin-1,5-disulfonsäure → 2-Acetylamino-8-hydroxynaphthalin-3,6-disulfonsäure, verseift. | desgl. | Scharlach |
| 202 | 2-Aminonaphthalin-1,5,7-trisulfonsäure → 2-Acetylamino-5-hydroxynaphthalin-7-sulfonsäure, verseift. | desgl. | Orange |
| 203 | 2-Aminonaphthalin-1,5,7-trisulfonsäure → 2-Acetylamino-8-hydroxynaphthalin-6-sulfonsäure, verseift. | desgl. | Scharlach |
| 204 | 2-Aminonaphthalin-3,6,8-trisulfonsäure → 2-Acetylamino-5-hydroxynaphthalin-7-sulfonsäure, verseift. | desgl. | Orange |
| 205 | 2-Aminonaphthalin-3,6,8-trisulfonsäure → 2-Acetylamino-5-hydroxynaphthalin-1,7-disulfonsäure, verseift. | desgl. | Orange |
| 206 | 2-Amino-5-aminomethyl-1,7-disulfonsäure → 2-Acetylamino-5-hydroxynaphthalin-7-sulfonsäure, verseift. | desgl. | Orange |
| 207 | 2-Amino-1-sulfo-5-aminomethyl-naphthalin → 2-Acetylamino-5-hydroxynaphthalin-7-sulfonsäure, verseift. | desgl. | Orange |
| 208 | 1-Aminobenzol-2-sulfonsäure → 1-(4'-Nitrobenzoylamino)-8-hydroxynaphthalin-3,6-disulfonsäure, reduziert. | desgl. | Rot |
| 209 | 1-Aminobenzol-2,4-disulfonsäure → 1-(3'-Nitrobenzoylamino)-8-hydroxynaphthalin-3,6-disulfonsäure, reduziert. | desgl. | Rot |
| 210 | 1-Aminobenzol-2,5-disulfonsäure → 1-(4'-Nitrobenzoylamino)-8-hydroxynaphthalin-4,6-disulfonsäure, reduziert. | desgl. | Rot |

Fortsetzung

| Nr. | Aminoazofarbstoff | Amin | Farbton auf Baumwolle |
|---|---|---|---|
| 211 | 2-Aminonaphthalin-1,5-disulfonsäure → 1-(4'-Nitrobenzoylamino)-8-hydroxy-naphthalin-3,6-disulfonsäure, reduziert. | β-(β-Chloräthyl-sulfonyl)-äthyl-amin | Rot |
| 212 | 2-Aminonaphthalin-1,5-disulfonsäure → 1-(4'-Nitrobenzoylamino)-8-hydroxy-naphthalin-4,6-disulfonsäure, reduziert. | desgl. | Rot |
| 213 | 2-Amino-1-sulfo-5-aminomethyl-naphthalin → 1-Benzoylamino-8-hydroxynaphthalin-3,6-disulfonsäure | desgl. | Rot |
| 214 | 2-Amino-1-sulfo-5-aminomethyl-naphthalin → 1-Acetylamino-8-hydroxynaphthalin-3,6-disulfonsäure | desgl. | Rot |
| 215 | 2-Amino-1-sulfo-5-aminomethyl-naphthalin → 1-Benzoylamino-8-hydroxynaphthalin-4,6-disulfonsäure | desgl. | Rot |
| 216 | 2-Amino-5-aminomethyl-1,7-disulfonaphthalin → 1-Benzoylamino-8-hydroxynaphthalin-3,6-disulfonsäure | desgl. | Rot |
| 217 | 2-Amino-5-aminomethyl-1,7-disulfonaphthalin → 1-Benzoylamino-8-hydroxynaphthalin-4,6-disulfonsäure | desgl. | Rot |
| 218 | 1-Aminobenzol-4-sulfonsäure $\xrightarrow{\text{sauer}}$ 1-Amino-8-hydroxynaphthalin-3,6-disulfonsäure $\xleftarrow{\text{alkalisch}}$ 1-Amino-3-acetylaminobenzol-6-sulfonsäure, verseift. | desgl. | Blau |
| 219 | 1-Aminobenzol-2,4-disulfonsäure $\xrightarrow{\text{sauer}}$ 1-Amino-8-hydroxynaphthalin-3,6-disulfonsäure $\xleftarrow{\text{alkalisch}}$ 1-Amino-3-acetylaminobenzol-6-sulfonsäure, verseift. | desgl. | Blau |

## Beispiel 220

16 g 1-Amino-8-hydroxynaphthalin-3,6-disulfonsäure werden in 200 ml Wasser mit 2 N Natriumcarbonatlösung bei pH 5,5 gelöst. Man kühlt die Lösung auf 0–3°C ab und läßt dann innerhalb von 5 Minuten 7,2 g 2,4,6-Trifluor-1,3,5-triazin zutropfen. Während des Eintropfens hält man den pH-Wert mit 2 N Natriumcarbonatlösung auf 4–4,5 und rührt anschließend noch 10 Minuten bei pH 4,5 nach. Man setzt nun 10,8 g β-(β-Chloräthyl-sulfonyl)-äthyl-amin-hydrochlorid zu der Lösung und hält den pH-Wert bei 5. Die Temperatur läßt man auf 20°C ansteigen.

8,7 g 1-Aminobenzol-2-sulfonsäure werden in 100 ml Wasser neutral gelöst. Man kühlt die Lösung auf 0–5°C ab, setzt 10 ml konz. Salzsäure zu und diazotiert durch Zutropfen von 25 ml 2 N Natriumnitritlösung. Nach halbstündigem Nachrühren wird evt. überschüssiges Nitrit mit Amidosulfonsäure beseitigt.

Man gibt nun bis 0–5°C die Diazoverbindung zur oben hergestellten Lösung der reaktiven Kupplungskomponente und hält im Kupplungsgemisch den pH-Wert mit 2 N Natriumcarbonatlösung auf 6. Man rührt 1 Stunde nach und läßt die Temperatur auf 20°C ansteigen. Der Farbstoff der Formel

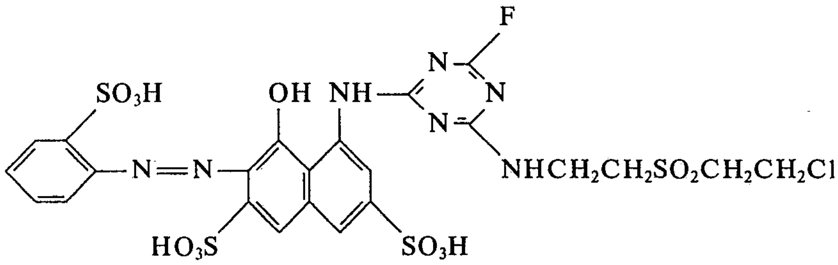

wird durch Zugabe von Natriumchlorid ausgesalzen, abgesaugt, gewaschen und getrocknet. Es stellt ein rotes Pulver dar und färbt Baumwolle und Zellwolle in blaustichig roten Tönen.

Nach der Arbeitsweise dieses Beispiels erhält man unter Verwendung der nachfolgend genannten Diazokomponenten gleichfalls wertvolle Reaktivfarbstoffe.

Tabelle 2 A

| Nr. | Diazokomponente | Farbton |
|---|---|---|
| 221 | 1-Amino-4-methylbenzol-2-sulfonsäure | blaust. Rot |
| 222 | 1-Aminobenzol-2,5-disulfonsäure | Rot |
| 223 | 1-Amino-4-chlorbenzol-2-sulfonsäure | Rot |
| 224 | 1-Amino-4-carboxybenzol | Rot |
| 225 | 1-Amino-4-methoxybenzol-2-sulfonsäure | blaust. Rot |
| 226 | 1-Amino-4-methoxybenzol-2,5-disulfonsäure | blaust. Rot |
| 227 | 2-Aminonaphthalin-1,5-disulfonsäure | blaust. Rot |
| 228 | 2-Aminonaphthalin-1,5,7-trisulfonsäure | blaust. Rot |

Beispiel 229

32 g des Kupferkomplexfarbstoffs aus 2-Hydroxy-4-sulfo-6-amino-naphthalin <1 azo 2>-1-hydroxy-5,7-disulfo-8-amino-naphthalin werden in 500 ml Eiswasser angerührt. Man tropft innerhalb 15 Minuten 7,1 g 2,4,6-Trifluor-1,3,5-triazin ein, wobei man durch gleichzeitige Zugabe von 2 N Natriumcarbonatlösung den pH-Wert zwischen 3,5 und 4,5 hält. Nach beendeter Kondensation gibt man 10,8 g $\beta$-($\beta$-Chloräthyl-sulfonyl)-äthyl-amin-hydrochlorid zu. Man läßt die Temperaturen auf 20°C ansteigen und hält den pH-Wert bei 4—5, bis kein Fluorwasserstoff mehr freigesetzt wird. Nach dem Aussalzen, Filtrieren, Trocknen und Mahlen erhält man ein blaues Farbstoffpulver, daß sich leicht in Wasser mit blauer Farbe löst. Der Farbstoff entspricht der Formel

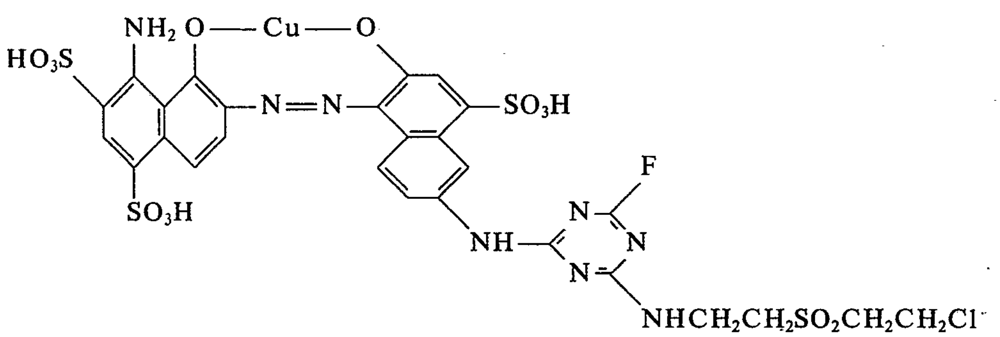

Farbstoffe von ähnlichen Eigenschaften erhält man analog der oben geschilderten Arbeitsweise aus den durch einfache, entmethylierende oder oxydierende Kupferung erhaltenen Kupferkomplexen der aus den in nachfolgender Tabelle 3 aufgeführten Diazo- und Azokomponenten hergestellten Mono- und Disazofarbstoffen.

Tabelle 3

| Nr. | Kupferkomplex | Amin | Farbton auf Baumwolle |
|---|---|---|---|
| 230 | 1-Hydroxy-2-aminobenzol-4-sulfonsäure → 2-Amino-5-hydroxynaphthalin-7-sulfonsäure | β-(β-Chloräthyl-sulfonyl)-äthyl-amin | Rubin |
| 231 | 1-Hydroxy-2-aminobenzol-5-sulfonsäure → 2-Methylamino-5-hydroxynaphthalin-7-sulfonsäure | desgl. | Rubin |
| 232 | 1-Hydroxy-2-aminobenzol-4,6-disulfonsäure → 2-Amino-5-hydroxynaphthalin-7-sulfonsäure | desgl. | Rubin |
| 233 | 1-Hydroxy-2-aminobenzol-4,6-disulfonsäure → 2-Amino-8-hydroxynaphthalin-6-sulfonsäure | desgl. | Rubin |
| 234 | 1-Hydroxy-2-aminobenzol-4,6-disulfonsäure → 1-Amino-8-hydroxynaphthalin-3,6-disulfonsäure | desgl. | Violett |
| 235 | 1-Hydroxy-2-aminobenzol-4,6-disulfonsäure → 1-Amino-8-hydroxynaphthalin-4,6-disulfonsäure | desgl. | Violett |
| 236 | 1-Hydroxy-2-aminobenzol-5-sulfonsäure → 1-Amino-8-hydroxynaphthalin-3,6-disulfonsäure | desgl. | Violett |
| 237 | 1-Hydroxy-2-aminobenzol-5-sulfonsäure → 1-Amino-8-hydroxynaphthalin-4,6-disulfonsäure | desgl. | Violett |
| 238 | 1-Hydroxy-2-amino-4-chlorbenzol-5-sulfonsäure → 2-Methylamino-8-hydroxynaphthalin-6-sulfonsäure | desgl. | Violett |
| 239 | 1-Hydroxy-2-amino-4-chlorbenzol-5-sulfonsäure → 1-Amino-8-hydroxynaphthalin-3,6-disulfonsäure | desgl. | blaust. Violett |
| 240 | 1-Hydroxy-2-amino-6-chlorbenzol-4-sulfonsäure → 2-Amino-5-hydroxynaphthalin-7-sulfonsäure | desgl. | Rubin |
| 241 | 1-Hydroxy-2-amino-6-chlorbenzol-4-sulfonsäure → 2-Methylamino-8-hydroxynaphthalin-6-sulfonsäure | desgl. | Rubin |
| 242 | 1-Hydroxy-2-amino-4-acetylaminobenzol-6-sulfonsäure → 1-Amino-8-hydroxynaphthalin-3,6-disulfonsäure, verseift | desgl. | blaust. Violett |
| 243 | 1-Hydroxy-2-amino-4-acetylaminobenzol-6-sulfonsäure → 1-Amino-8-hydroxynaphthalin-2,4-disulfonsäure, verseift | desgl. | Blau |
| 244 | 1-Hydroxy-2-amino-4-acetylaminobenzol-6-sulfonsäure → 1-Amino-8-hydroxynaphthalin-2,4,6-trisulfonsäure, verseift | desgl. | Blau |

Fortsetzung

| Nr. | Kupferkomplex | Amin | Farbton auf Baumwolle |
|---|---|---|---|
| 245 | 1-Hydroxy-2-amino-6-acetylaminobenzol-4-sulfonsäure → 1-Amino-8-hydroxynaphthalin-2,4-disulfonsäure, verseift | β-(β-Chloräthyl-sulfonyl)-äthyl-amin | Blau |
| 246 | 1-Hydroxy-2-amino-6-acetylaminobenzol-4-sulfonsäure → 1-Amino-8-hydroxynaphthalin-3,6-disulfonsäure, verseift | desgl. | blaust. Violett |
| 247 | 2-Aminonaphthalin-4,6,8-trisulfonsäure → 2-Hydroxy-6-acetylamino-naphthalin-4-sulfonsäure, oxydierend gekupfert, verseift | desgl. | rotst. Blau |
| 248 | 1-Diazo-2-hydroxy-6-nitronaphthalin-4-sulfonsäure → 1-Hydroxynaphthalin-4,8-disulfonsäure, reduziert | desgl. | Violett |
| 249 | 1-Diazo-2-hydroxy-6-nitronaphthalin-4-sulfonsäure → 1-Benzoylamino-8-hydroxynaphthalin-3,6-disulfonsäure, reduziert | desgl. | blaust. Violett |
| 250 | 2-Aminonaphthalin-4,6,8-trisulfonsäure → 2-Acetylamino-5-hydroxynaphthalin-7-sulfonsäure, oxydierend gekupfert, verseift | desgl. | Violett |
| 251 | 2-Aminonaphthalin-4,8-disulfonsäure → 2-Acetylamino-5-hydroxynaphthalin-4,8-disulfonsäure, oxydierend gekupfert, verseift | desgl. | blaust. Violett |
| 252 | 2-Aminonaphthalin-6,8-disulfonsäure → 2-Acetylamino-5-hydroxynaphthalin-7-sulfonsäure, oxydierend gekupfert, verseift | desgl. | Bordo |
| 253 | 2-Aminonaphthalin-4,8-disulfonsäure → 1-Amino-8-hydroxynaphthalin-3,6-disulfonsäure, oxydierend gekupfert | desgl. | Blau |
| 254 | 3-Methoxy-4-amino-6-methyl-azobenzol-2',4'-disulfonsäure → 2-N-Acetyl-methyl-amino-5-hydroxynaphthalin-7-sulfonsäure, entmethylierend gekupfert, verseift. | desgl. | Marineblau |
| 255 | 3-Methoxy-4-amino-6-methyl-azobenzol-2',5'-disulfonsäure → 2-N-Acetyl-N-methyl-amino-5-hydroxynaphthalin-7-sulfonsäure, entmethylierend gekupfert, verseift. | desgl. | Marineblau |
| 256 | 3-Methoxy-4-amino-6-methyl-azobenzol-2',5'-disulfonsäure → 2-Acetylamino-5-hydroxynaphthalin-1,7-disulfonsäure, entmethylierend gekupfert, verseift. | desgl. | Marineblau |
| 257 | 3-Methoxy-4-amino-azobenzol-2',5'-disulfonsäure → 2-Acetylamino-5-hydroxynaphthalin-6-sulfonsäure, entmethylierend gekupfert, verseift. | desgl. | Blau |

Fortsetzung

| Nr. | Kupferkomplex | Amin | Farbton auf Baumwolle |
|---|---|---|---|
| 258 | 1-Aminobenzol-2,5-disulfonsäure → 1-Amino-naphthalin-6-sulfonsäure → 2-Acetylamino-5-hydroxynaphthalin-4,8-disulfonsäure, oxydierend gekupfert, verseift. | β-(β-Chloräthyl-sulfonyl)-äthyl-amin | grünst. Blau |
| 259 | 1-Amino-5-acetylamino-2-methoxybenzol-3-sulfonsäure → 1-Amino-2-methoxybenzol → 1-Hydroxynaphthalin-3,6,8-trisulfonsäure, entmethylierend gekupfert, verseift | desgl. | Marineblau |
| 260 | 1-Amino-5-acetylamino-2-methylbenzol-3-sulfonsäure → 1-Amino-2-methoxy-5-methylbenzol → 1-Hydroxynaphthalin-3,6-disulfonsäure, entmethylierend gekupfert, verseift | desgl. | Marineblau |
| 261 | 1-Amino-3-acetylamino-2-methylbenzol-5-sulfonsäure → 1-Amino-2-methoxy-5-methylbenzol → 1-Hydroxynaphthalin-3,6,8-trisulfonsäure, entmethylierend gekupfert, verseift | desgl. | Marineblau |
| 262 | 1-Amino-4-acetylaminobenzol-2-sulfonsäure → 1-Amino-2-methoxy-5-methylbenzol → 1-Hydroxynaphthalin-3,6,8-trisulfonsäure, entmethylierend gekupfert, verseift | desgl. | Marineblau |

## Beispiel 263

36,7 g des Farbstoffes 6-Sulfo-4-[4',6',8'-trisulfonaphthylazo-(2')]-naphthalin<1 azo 4>1-amino-3-methylbenzol werden in 500 ml Wasser neutral gelöst. Bei 0—3°C tropft man innert 15 Minuten 7,1 g 2,4,6-Trifluor-1,3,5-triazin ein, wobei man durch gleichzeitige Zugabe von 2 N Natriumhydroxydlösung den pH-Wert zwischen 5 und 6 hält. Nach beendigter Kondensation gibt man 10,8 g β-(β-Chloräthyl-sulfonyl)-äthyl-amin-hydrochlorid zu. Man läßt die Temperatur auf 20°C ansteigen und hält den pH-Wert mit 2 N Natriumcarbonatlösung bei 4—5 bis das zweite Fluoratom gegen das Amin ausgetauscht ist. Nach dem Aussalzen, Filtrieren, Trocknen und Mahlen erhält man ein braunes Farbstoffpulver, das Baumwolle und Zellwolle in kräftigen Brauntönen färbt. Der Farbstoff entspricht der Formel

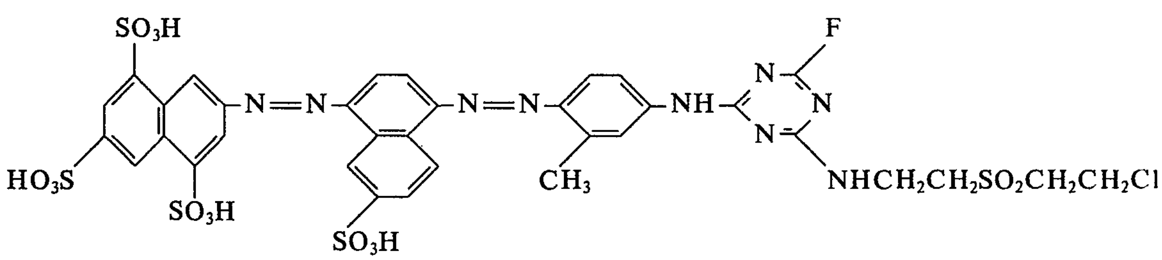

Vergleichbare Farbstoffe werden erhalten, wenn man die in der zweiten Spalte der nachfolgenden Tabelle 4 aufgeführten Aminoazofarbstoffe mit 2,4,6-Trifluor-1,3,5-triazin kondensiert und anschließend mit den in Spalte 3 genannten Aminen umsetzt.

Tabelle 4

| Nr. | Aminoazofarbstoff | Amin | Farbton auf Baumwolle |
|---|---|---|---|
| 264 | 1-Aminobenzol-2,4-disulfonsäure → 1-Aminonaphthalin-6-sulfonsäure → 1-Aminonaphthalin-8-sulfonsäure | β-(β-Chloräthyl-sulfonyl)-äthyl-amin | rotst. Braun |
| 265 | 1-Aminonaphthalin-2,5,7-trisulfonsäure → 1-Aminonaphthalin-6-sulfonsäure → 1-Aminonaphthalin-8-sulfonsäure | desgl. | violettst. Braun |
| 266 | 1-Aminonaphthalin-2,5,7-trisulfonsäure → 1-Amino-2-methoxy-5-methylbenzol → 1-Aminonaphthalin-8-sulfonsäure | desgl. | rotst. Braun |
| 267 | 1-Aminonaphthalin-2,5,7-trisulfonsäure → 1-Amino-3,6-dimethylbenzol → 1-Amino-naphthalin-6-sulfonsäure | desgl. | Braun |
| 268 | 1-Aminonaphthalin-2,5,7-trisulfonsäure → 1-Aminonaphthalin → 1-Aminonaphthalin-6-sulfonsäure | desgl. | Braun |
| 269 | 1-Aminobenzol-2,4-disulfonsäure → 1-Aminonaphthalin-6-sulfonsäure → 1-Amino-3-methylbenzol | desgl. | Orangebraun |
| 270 | 1-Aminobenzol-2,5-disulfonsäure → 1-Aminonaphthalin-6-sulfonsäure → 1-Amino-2-methoxy-5-methylbenzol | desgl. | Rotbraun |
| 271 | 2-Aminonaphthalin-4,8-disulfonsäure → 1-Aminonaphthalin-6-sulfonsäure → 1-Amino-3-methylbenzol | desgl. | Rotbraun |
| 272 | 1-Aminonaphthalin-4,7-disulfonsäure → 1-Aminonaphthalin-6-sulfonsäure → 1-Amino-3-methylbenzol | desgl. | Rotbraun |
| 273 | 2-Aminonaphthalin-4,8-disulfonsäure → 1-Aminonaphthalin-7-sulfonsäure → 1-Aminonaphthalin-6,8-disulfonsäure | desgl. | Braun |
| 274 | 2-Aminonaphthalin-4,8-disulfonsäure → 1-Aminonaphthalin-6-sulfonsäure → 1-Aminonaphthalin-8-sulfonsäure | desgl. | rotst. Braun |
| 275 | 1-Aminobenzol-2,5-disulfonsäure → 1-Aminonaphthalin-6-sulfonsäure → 1-Aminonaphthalin-7-sulfonsäure | desgl. | rotst. Braun |
| 276 | 4-Aminoazobenzol-3,4'-disulfonsäure → 1-Amino-3-acetylaminobenzol | desgl. | gelbst. Braun |
| 277 | 4-Aminoazobenzol-3,4'-disulfonsäure → 1-Aminonaphthalin-6-sulfonsäure | desgl. | gelbst. Braun |

Beispiel 278

Man löst 25,7 g des Triazols der Formel

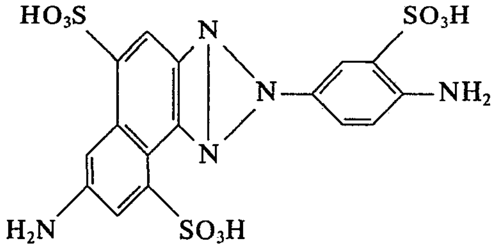

bei pH 6,5 in 500 ml Wasser, kühlt auf 0°C und tropft langsam 7,1 g 2,4,6-Trifluor-1,3,5-triazin zu. Gleichzeitig wird mit 2 N Natriumcarbonatlösung der pH konstant gehalten. Die Reaktion ist in wenigen Minuten beendet. Es werden 10,8 g $\beta$-($\beta$-Chloräthyl-sulfonyl)-äthyl-amin-hydrochlorid zugegeben. Man läßt die Temperatur auf Raumtemperatur ansteigen und hält durch Zutropfen einer 2 N Natriumcarbonatlösung während 1—3 Stunden einen pH-Wert von 4,5—5,5. Nach beendeter zweiter Kondensation versetzt man mit 3,5 g Natriumnitrit und läßt in eine Vorlage aus 100 ml Eiswasser und 15 ml konz. Salzsäure einlaufen. Nach einer Stunde Nachreagieren zerstört man evtl. überschüssige salpetrige Säure mit Amidosulfonsäure, streut 14,2 g 1-(4'-Sulfophenyl)-3-carboxy-pyrazolon-(5) ein und kuppelt bei einem pH-Wert von 5. Nach Ende der Reaktion filtriert man ab und trocknet bei 40°C im Vakuum. Der erhaltene Farbstoff der Formel

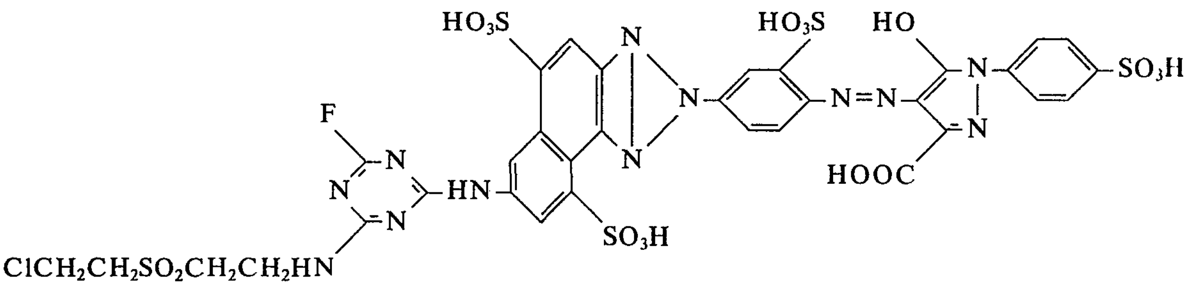

stellt ein orangefarbenes Pulver dar, das sich in Wasser mit gelber Farbe löst und Baumwolle in rotstichig gelben Tönen anfärbt.

Verwendet man anstelle von 1-(4'-Sulfophenyl)-3-carboxy-pyrazolon-(5) eine der nachfolgend aufgeführten Kupplungskomponenten so erhält man ebenfalls wertvolle Farbstoffe:

1-(2'-Chlor-5'-sulfophenyl)-3-methyl-pyrazolon-(5)
1-(2'-Chlor-4-sulfophenyl)-3-methyl-pyrazolon-(5)
1-(2'-Metyhl-4'-sulfophenyl)-3-methyl-pyrazolon-(5)
1-(2'-Methyl-6'-chlor-4'-sulfophenyl)-3-methyl-pyrazolon-(5)
1-(4'-Sulfophenyl)-3-methyl-pyrazolon-(5)
1-(2'-Methyl-4'-sulfophenyl)-3-carboxy-pyrazolon-(5)
1-(3'-Sulfophenyl)-3-methyl-pyrazolon-(5)
1-(2',5'-Disulfophenyl)-3-methyl-pyrazolon-(5)
1-(2',5'-Dichlor-4'-sulfophenyl)-3-methyl-pyrazolon-(5)
1-Acetoacetylamino-2-methylbenzol
1-Acetoacetylamino-2-methoxybenzol
1-Äthyl-3-sulfomethyl-4-methyl-6-hydroxypyridon-(2)-5-carbonsäureamid.

Färbevorschrift I

2 Teile des gemäß Beispiel 1 erhaltenen Farbstoffes werden unter Zusatz von 0,5 Teilen m-nitrobenzolsulfonsaurem Natrium in 100 Teile Wasser gelöst. Mit der erhaltenen Lösung wird ein Baumwollgewebe imprägniert, so daß es um 75% seines Gewichtes zunimmt, und dann getrocknet.

Danach imprägniert man das Gewebe mit einer 20°C warmen Lösung, die pro Liter 5 g Natriumhydroxyd und 300 g Natriumchlorid enthält, quetscht auf 75% Gewichtszunahme ab, dämpft die Färbung während 30 Sekunden bei 100 bis 101°C, spült, seift während einer Viertelstunde in einer 0,3%igen kochenden Lösung eines ionenfreien Waschmittels, spült und trocknet.

Färbevorschrift II

2 Teile des gemäß Beispiel 1 erhältlichen Farbstoffes werden in 100 Teile Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 40°C, wobei nach 30 Minuten 40 Teile kalzinierte Soda und nochmals 60 Teile Natriumchlorid zugegeben werden. Man hält die Temperatur 30 Minuten auf 40°C, spült und seift dann die Färbung während 15 Minuten in einer 0,3%igen kochenden Lösung eines ionenfreien Waschmittels, spült und trocknet.

Druckvorschrift

2 Teile des gemäß Beispiel 1 hergestellten Farbstoffes werden unter schnellem Rühren in 100 Teile einer Stammverdickung, enthaltend 45 Teile 5%ige Natriumalginatverdickung, 32 Teile Wasser, 20 Teile Harnstoff, 1 Teil m-nitrobenzolsulfonsaures Natrium sowie 2 Teile Natriumcarbonat, eingestreut.

Mit der so erhaltenen Druckpaste bedruckt man ein Baumwollgewebe auf einer Rouleauxdruckmaschine, trocknet und dämpft den erhaltenen bedruckten Stoff 2 bis 8 Minuten bei 100°C in gesättigtem Dampf. Das bedruckte Gewebe wird dann in kaltem und heißem Wasser gründlich gespült, wobei sich die nicht chemisch fixierten Anteile sehr leicht von der Faser entfernen lassen, und anschließend getrocknet.

**Patentansprüche**

1. Reaktivfarbstoffe der Formel

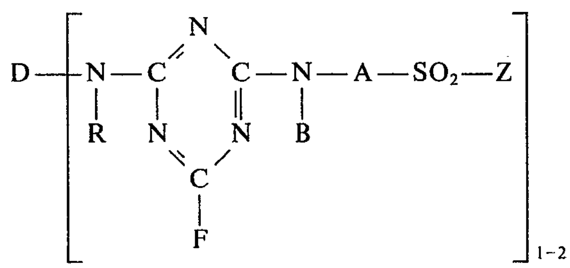

(1)

worin D der Rest eines organischen Farbstoffes der Mono- oder Polyazo-, Metallkomplexazo- oder Stilben-Reihe, R Wasserstoff oder gegebenenfalls substituiertes $C_{1-4}$-Alkyl, A $C_{2-6}$-Alkylen, Z $\beta$-Halogenäthyl oder Vinyl und B Wasserstoff oder der Rest eines gegebenenfalls substituierten Kohlenwasserstoffs ist.

2. Reaktivfarbstoffe gemäß Anspruch 1, worin D, R, A und Z die in Anspruch 1 angegebenen Bedeutungen haben, und B Wasserstoff oder $C_{1-4}$-Alkyl ist.

3. Reaktivfarbstoffe gemäß Anspruch 1, worin D, R, Z und B die in Anspruch 1 angegebenen Bedeutungen haben, und A Äthylen ist.

4. Reaktivfarbstoffe gemäß Anspruch 2, der Formel

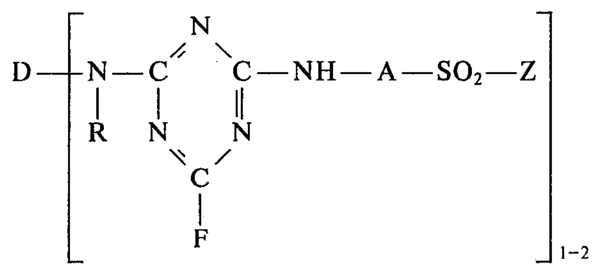

(2)

worin D und Z die in Anspruch 2 angegebenen Bedeutungen haben, R Wasserstoff, Methyl oder Äthyl, und A $C_{2-4}$-Alkylen ist.

5. Reaktivfarbstoffe gemäß Anspruch 4, worin A Äthylen ist.

6. Reaktivfarbstoffe gemäß einem der Ansprüche 1 bis 5, worin D der Rest eines Mono- oder Disazofarbstoffes ist.

7. Reaktivfarbstoffe gemäß einem der Ansprüche 1 bis 5, worin D der Rest eines Metallkomplexazofarbstoffes ist.

8. Reaktivfarbstoffe gemäß Anspruch 7, worin D der Rest eines Metallkomplexfarbstoffes der Benzol- oder Naphthalinreihe ist.

9. Reaktivfarbstoffe gemäß Anspruch 8, worin D der Rest eines 1 : 1-Kupferkomplexazofarbstoffes der Benzol- oder Naphthalinreihe ist, und das Kupferatom an jeweils eine metallisierbare Gruppe in ortho-Position zur Azobindung gebunden ist.

10. Reaktivfarbstoffe gemäß Anspruch 6, der Formel

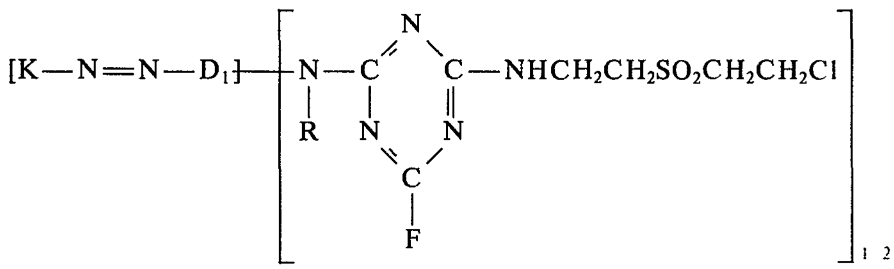

(3)

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist, oder je ein Reaktivrest sowohl an die Diazokomponente als auch an die Kupplungskomponente gebunden ist.

11. Reaktivfarbstoffe gemäß Anspruch 10, worin R Wasserstoff oder Methyl ist.

12. 1 : 1-Kupferkomplexe von Reaktivfarbstoffen gemäß Anspruch 10.

13. Verfahren zur Herstellung von Reaktivfarbstoffen gemäß Anspruch 1, dadurch gekennzeichnet, daß man organische Farbstoffe der Formel

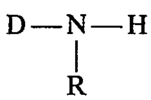

(4)

oder Farbstoffvorprodukte mit mindestens einem Äquivalent 2,4,6-Trifluor-1,3,5-triazin der Formel

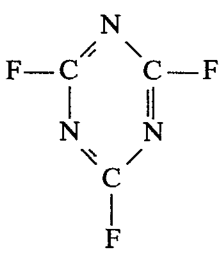

(5)

kondensiert, und das Kondensationsprodukt mit mindestens einem Äquivalent eines Amins der Formel

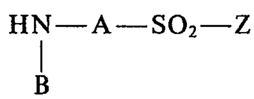

(6)

zu einem Reaktivfarbstoff der Formel (1) kondensiert, wobei D, R, A, Z und B in den Formeln (4) und (6) die in Anspruch 1 angegebenen Bedeutungen haben, und daß man im Falle der Verwendung von Farbstoffvorprodukten, diese in die gewünschten Endfarbstoffe umwandelt.

14. Verwendung der Reaktivfarbstoffe gemäß den Ansprüchen 1 bis 12 bzw. der gemäß Anspruch 13 erhaltenen Reaktivfarbstoffe zum Färben und Bedrucken.

15. Verwendung gemäß Anspruch 14 zum Färben von Cellulosefasern.

## Claims

1. A reactive dye of the formula

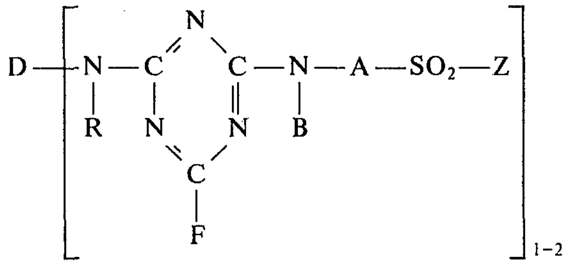

(1)

in which D is the radical of an organic dye of the monoazo, polyazo, metal complex azo or stilbene series, R is hydrogen or unsubstituted or substituted $C_{1-4}$alkyl, A is $C_{2-6}$alkylene, Z is $\beta$-halogenoethyl or vinyl, and B is hydrogen or the radical of an unsubstituted or substituted hydrocarbon.

2. A reactive dye according to claim 1, in which D, R, A and Z are as defined in claim 1 and B is hydrogen or $C_{1-4}$alkyl.

3. A reactive dye according to claim 1, in which D, R, Z and B are as defined in claim 1 and A is ethylene.

4. A reactive dye according to claim 2 of the formula

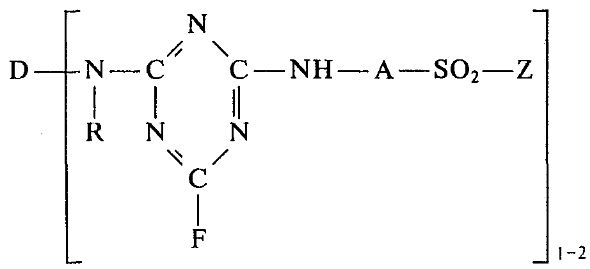

(2)

in which D and Z are as defined in claim 2, R is hydrogen, methyl or ethyl, and A is $C_{2-4}$alkylene.

5. A reactive dye according to claim 4, in which A is ethylene.

6. A reactive dye according to any one of claims 1 to 5, in which D is the radical of a monoazo or disazo dye.

7. A reactive dye according to any one of claims 1 to 5, in which D is radical of a metal complex azo dye.

8. A reactive dye according to claim 7, in which D is the radical of a metal complex azo dye of the benzene or naphthalene series.

9. A reactive dye according to claim 8, in which D is the radical of a 1 : 1 copper complex azo dye of the benzene or naphthalene series and each copper atom is bonded to a metallizable group in ortho-position relative to the azo bond.

10. A reactive dye according to claim 6 of the formula

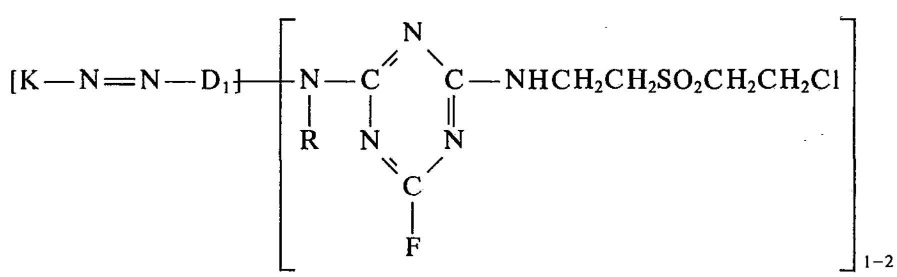

(3)

in which $D_1$ is the radical of a diazo component of the benzene or naphthalene series, K is the radical of a coupling component of the benzene or naphthalene series or of the heterocyclic series, and R is hydrogen or unsubstituted or substituted $C_{1-4}$alkyl, and the reactive radical is bonded to the diazo component or to the coupling component, or each reactive radical is bonded not only to the diazo component but also to the coupling component.

11. A reactive dye according to claim 10, in which R is hydrogen or methyl.

12. A 1 : 1 copper complex of a reactive dye according to claim 10.

13. A process for the preparation of a reactive dye according to claim 1, which comprises condensing an organic dye of the formula

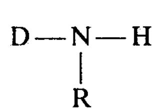

(4)

or a dye precursor with at least one equivalent of 2,4,6-trifluoro-1,3,5-triazine of the formula

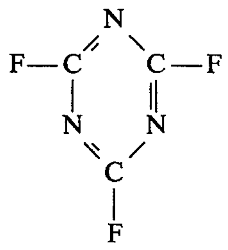

(5)

and condensing the condensation product with at least one equivalent of an amine of the formula

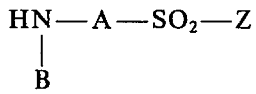

(6)

to give a reactive dye of the formula (1), and where D, R, A, Z and B in the formulae (4) and (6) are as defined in claim 1, and wherein if a dye precursor is used, it is converted into a desired final dye.

14. Use of the reactive dye in accordance with any one of claims 1 to 12 or of a reactive dye obtained according to claim 13 for dyeing or printing.

15. Use according to claim 14 for dyeing cellulose fibers.

**Revendications**

1. Colorants réactifs de formule

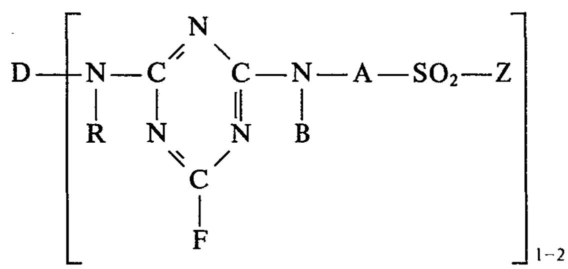

(1)

dans laquelle D représente le résidu d'un colorant organique de la série mono-ou polyazoïque, ou de la série azoïque à complexe métallifére ou de la série des stilbènes; R représente un atome d'hydrogène ou un groupe alkyle en $C_{1-4}$ éventuellement substitué; A représente un groupe alkylène en $C_{2-6}$; Z représente un groupe $\beta$-halogèno-éthyle ou vinyle, et B représente un atome d'hydrogène ou le résidu d'un hydrocarbure événtuellement subsitué.

2. Colorants réactifs selon la revendication 1, où D, R, A et Z les significations données dans la revendication 1, et où B est constitué d'un atome d'hydrogène ou d'un groupe alkyle en $C_{1-4}$.

3. Colorants réactifs selon la revendication 1, où D, R, Z et B ont les significations données dans la revendication 1 et où A est un groupe éthylène.

4. Colorants réactifs selon la revendication 2, de formule

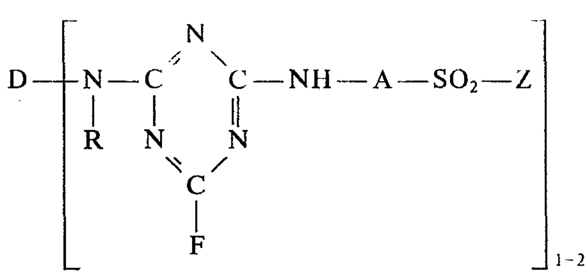

(2)

dans laquelle D et Z ont les significations données dans la revendication 2; R est constitué d'un atome d'hydrogène, d'un groupe méthyle ou éthyle, et A est constitué d'un groupe alkylène en $C_{2-4}$.

5. Colorants réactifs selon la revendication 4, où A est un groupe éthylène.

6. Colorants réactifs selon l'une des revendications 1 à 5, où D est constitué du résidu d'un colorant mono-ou disazoïque.

7. Colorants réactifs selon l'une des revendications 1 à 5, où D est constitué du résidu d'un colorant azoïque à complexe métallifère.

8. Colorants réactifs selon la revendication 7, où D est constitué du résidu d'un colorant azoïque à complexe métallifère de la série du benzène ou de celle du naphthalène.

9. Colorants réactifs selon la revendication 8, où D est constitué du résidu d'un colorant azoïque à complexe 1 : 1 de cuivre de la série du benzène ou de celle du naphthalène, et où l'atome de cuivre est lié à chaque groupe métallable en position ortho par rapport à la liaison azoïque.

10. Colorants réactifs selon la revendication 6, de formule

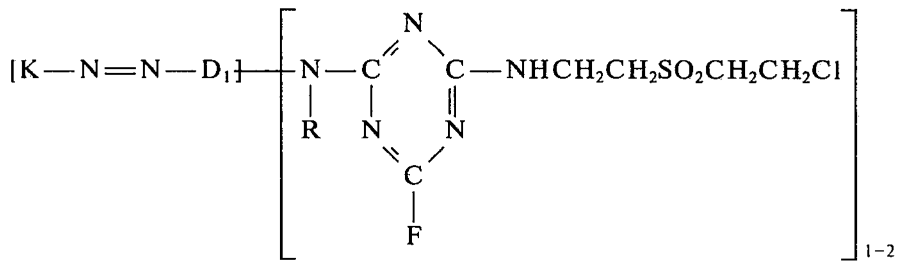 (3)

dans laquelle $D_1$ représente le résidu d'un composant diazoïque de la série du benzène ou de celle du naphthalène; K représente le résidu d'un composant de copulation de la série du benzène ou de celle du naphthalène ou de la série hétérocyclique et R représente un atome d'hydrogène ou un groupe alkyle en $C_{1-4}$ éventuellement substitué et dans laquelle le résidu réactif est lié au composant diazoïque ou au composant de copulation, ou bien chaque résidu réactif est lié aussi bien au composant diazoïque qu'au composant de copulation.

11. Colorants réactifs selon la revendication 10, où R est constitué d'un atome d'hydrogène ou d'un groupe méthyle.

12. Complexes 1 : 1 de cuivre de colorants réactifs selon la revendication 10.

13. Procédé pour la préparation de colorants réactifs selon la revendication 1, caractérisé par le fait que l'on condense des colorants organiques de formule

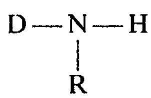 (4)

ou des précurseurs de colorants avec au moins un équivalent de 2,4,6-trifluoro-1,3,5-triazine de formule

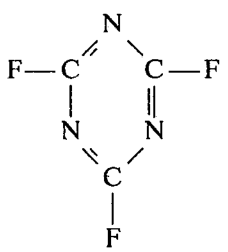 (5)

et que le produit de condensation est condensé avec au moins un équivalent d'une amine de formule

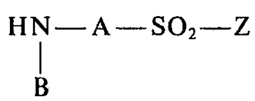 (6)

pour arriver à un colorant réactif de formule (1), où D, R, A, Z et B ont, dans les formules (4) et (6), les significations données dans la revendication 1, et que, dans le cas d'utilisation des précurseurs, on transforme ceux-ci en colorants finis désirés.

14. Utilisation des colorants réactifs selon les revendications 1 à 12 ou des colorants réactifs obtenus selon la revendication 13 pour la teinture et l'impression.

15. Utilisation selon la revendication 14 pour la teinture de fibres cellulosiques.